(19) Europäisches Patentamt
European Patent Office
Office européen des brevets

(11) **EP 3 610 684 B1**

(12) **EUROPEAN PATENT SPECIFICATION**

(45) Date of publication and mention
of the grant of the patent:
**27.05.2026 Bulletin 2026/22**

(21) Application number: **18792225.7**

(22) Date of filing: **01.04.2018**

(51) International Patent Classification (IPC):
*H04W 64/00* (2009.01)    *G01S 5/02* (2010.01)
*H04W 4/02* (2018.01)

(52) Cooperative Patent Classification (CPC):
**H04W 4/023**

(86) International application number:
**PCT/CN2018/081496**

(87) International publication number:
**WO 2018/196558 (01.11.2018 Gazette 2018/44)**

(54) **SYSTEM AND METHOD FOR COLLABORATIVE POSITION DETERMINATION**

SYSTEM UND VERFAHREN ZUR KOLLABORATIVEN POSITIONSBESTIMMUNG

SYSTÈME ET PROCÉDÉ DESTINÉS À UNE DÉTERMINATION DE POSITION COLLABORATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2017 US 201715496381**

(43) Date of publication of application:
**19.02.2020 Bulletin 2020/08**

(73) Proprietor: **Huawei Technologies Co., Ltd.
Longgang District
Shenzhen, Guangdong 518129 (CN)**

(72) Inventors:
• **XIA, Pengfei
Shenzhen, Guangdong, 518129 (CN)**

• **LIU, Bin
Shenzhen, Guangdong, 518129 (CN)**
• **TENNY, Nathan Edward
Shenzhen, Guangdong, 518129 (CN)**
• **STIRLING-GALLACHER, Richard
Shenzhen, Guangdong, 518129 (CN)**

(74) Representative: **Epping - Hermann - Fischer
Patentanwaltsgesellschaft mbH
Schloßschmidstraße 5
80639 München (DE)**

(56) References cited:
**EP-A1- 2 239 913        EP-A2- 1 251 709
WO-A1-2016/048509    WO-A2-2007/103821
US-A1- 2016 366 554**

## Description

## TECHNICAL FIELD

The present disclosure relates generally to a system and method for digital communications, and, in particular embodiments, to a system and method for collaborative position determination.

## BACKGROUND

Knowing the position or location of a communications device is important in modern communications systems. The position of the communications device may be used to provide lifesaving services for emergency calls and is a requirement by operators in certain regions to meet statutory requirements. Furthermore, position information of the communications device may be used to support commercial services, such as location based services (LBS) for shopping, tourism, gaming, transport on demand, and so on.

Document EP 2 239 913 A1 relates to a method and an apparatus for WiMAX positioning by downlink preamble fast detection (DPFD), wherein mobile user station (MSS) detects downlink preambles from base stations (BSs) and all of which are synchronized by in time-division duplexing (TDD) mode mobile WiMAX. The time difference of arrival (TDoA) of different BSs' preamble is get through preamble-based synchronization detection, wherein the exact location is calculated through classical TDoA algorithms. Thus, this document describes a concept for measuring the position of the mobile user equipment by the uplink ranging assistant downlink preamble detection.

Document US 2016/366554 A1 relates to methods for determining a line of bearing (LOB) of one or more user equipment (UE) in a wireless system employing Time Difference of Arrival (TDOA). The TDOA techniques are based on estimating the difference in the arrival times of reference signals from multiple receivers or from multiple emitters to a receiver. A particular value of the time difference estimate defines a hyperbola between the two receivers on which the handset may exist. When the distance between the receiving antennas is small relative to the distance of the emitter source (the handset) being located, then the TDOA is equivalent to the angle between the baseline of the sensors (receivers antennas) and the incident RF energy from the emitter. If the angle between the baseline and true North is known, then the line of bearing (LOB) and/or angle of arrival (AoA), can be utilized to determine the location of the UE.

## SUMMARY

Example embodiments provide a method for user device position determination, a location server adapted to determine user device position and a communications system for collaborative position determination. The present invention is set out by the set of appended claims. In the following, parts of the description and drawing referring to examples, which are not covered by the claims are not presented as embodiments of the invention, but as illustrative examples useful for understanding the invention. The embodiments of the invention are provided by the set of appended claims.

In accordance with an example embodiment, a method for user device position determination is provided. The method includes initiating, by a location server, a location determination process, receiving, by the location server, measurement reports originating from at least two user devices, the measurement reports include observed time difference of arrival (OTDOA) measurements associated with at least two access nodes, inter-device measurements (IDMs) among the at least two user devices, and angle information associated with the at least two access nodes, and determining, by the location server, positions of the at least two user devices in accordance with the OTDOA measurements associated with the at least two access nodes, the IDMs, and the angle information associated with the at least two access nodes.

Initiating the location determination process includes transmitting a location determining request to at least one of the at least two access nodes. The IDMs include a round trip time (RTT) measurement, and at least one of an angle of arrival (AoA) from a first user device to a second user device, an angle of departure (AoD) from the first user device to the second user device, an AoA from the second user device to the first user device, or an AoD from the second user device to the first user device. The IDMs include a RTT measurement, and at least two of a first AoA from a first user device to a second user device, a second AoA from the first user device to the second user device, a third AoA from the second user device to the first user device, a fourth AoA from the second user device to the first user device, a first AoD from the first user device to the second user device, a second AoD from the first user device to the second user device, a third AoD from the second user device to the first user device, or a fourth AoD from the second user device to the first user device.

An OTDOA measurement includes a difference between a first arrival time from a first access node to a first user device and a second arrival time from a second access node to the first user device. The angle information includes first angular information from one of the at least two user devices to one of the at least two access nodes, and second angular information from one of the at least two access nodes to one of the at least two user devices. Determining the positions of the at least two user devices includes determining, by the location server, a plurality of positions of the at least two user devices in accordance with the OTDOA measurements and the IDMs, and selecting, by the location server, the positions of the at least two user devices from the plurality of positions, in accordance with the angle information.

In accordance with an example embodiment, a method for user device position determination is provided. The method includes receiving, by a first access node, a request for initiating a location determination process, transmitting, by the first access node, positioning reference signals (PRSs) to at least two user devices, and initiating, by the first access node, an IDM at the at least two user devices.

The method includes configuring, by the first access node, a second access node to participate in the location determination process. Initiating the IDM includes transmitting, by the first access node, a transmit IDM packet request to a first user device, and transmitting, by the first access node, a make an IDM request to a second user device. The method includes receiving, by the first access node, at least one measurement report including OTDOA measurements associated with the first access node and a second access node, IDMs, and angle information associated with the first access node and a second access node, and transmitting, by the first access node, the at least one measurement report to a location server.

The method includes configuring, by the first access node, the at least two user devices to make OTDOA measurements. Configuring the at least two user devices to make the OTDOA measurements includes transmitting resource allocation information regarding a resource used to convey the PRSs.

In accordance with an example embodiment, a location server adapted to determine user device position is provided. The location server includes one or more processors, and a computer readable storage medium storing programming for execution by the one or more processors. The programming including instructions to configure the location server to initiate a location determination process, receive measurement reports originating from at least two user devices, the measurement reports include OTDOA measurements associated with at least two access nodes, IDMs among the at least two user devices, and angle information associated with the at least two access nodes, and determine positions of the at least two user devices in accordance with the OTDOA measurements associated with the at least two access nodes, the IDMs, and the angle information associated with the at least two access nodes.

The programming includes instructions to configure the location server to a location determining request to at least one of the at least two access nodes. The programming includes instructions to configure the location server to determine a plurality of positions of the at least two user devices in accordance with the OTDOA measurements and the IDMs, and select the positions of the at least two user devices from the plurality of positions, in accordance with the angle information. The location server is one of a stand-alone network entity, co-located with a first network entity, or a logical function implemented in a second network entity.

In accordance with an example embodiment, a first access node adapted to determine user device position is provided. The first access node includes one or more processors, and a computer readable storage medium storing programming for execution by the one or more processors. The programming including instructions to configure the first access node to receive a request for initiating a location determination process, transmit PRSs to at least two user devices, and initiate an IDM at the at least two user devices.

The programming includes instructions to configure the first access node to configure a second access node to participate in the location determination process. The programming includes instructions to configure the first access node to transmit a transmit IDM packet request to a first user device, and transmit a make an IDM request to a second user device. The programming includes instructions to configure the first access node to receive at least one measurement report including OTDOA measurements associated with the first access node and a second access node, IDMs, and angle information associated with the first access node and a second access node, and transmit the at least one measurement report to a location server.

The programming includes instructions to configure the first access node to configure the at least two user devices to make OTDOA measurements. The programming includes instructions to configure the first access node to transmit resource allocation information regarding a resource used to convey the PRSs.

Practice of the foregoing embodiments enables the determination of the position of a communications device while requiring a fewer number of line of sight measurements. The smaller number of line of sight measurements improves the possibility of determining the position of a communications device for a larger number of devices, while helping to reduce residual errors present in position estimates derived from unreliable line of sight measurements.

**BRIEF DESCRIPTION OF THE DRAWINGS**

For a more complete understanding of the present disclosure, and the advantages thereof, reference is now made to the following descriptions taken in conjunction with the accompanying drawings, in which:

Figure 1 illustrates an example wireless communications system according to example embodiments described herein;

Figure 2 illustrates communications system highlighting the position determination of a communications device using the prior art observed time difference of arrival (OTDOA) method;

Figure 3 illustrates a plot of an estimated position of a UE and the impact of measurement uncertainty on the estimated position;

Figure 4 illustrates a communications system highlighting the position determination of a pair of UEs utilizing OTDOA measurements and IDMs according to example embodiments described herein;

Figure 5 illustrates a plot highlighting the non-unique positions when only OTDOA measurements and IDM are used according to example embodiments described herein;

Figure 6 illustrates transmissions made by devices participating in position determination for a pair of UEs using OTDOA measurements, inter-device measurement (IDM) generated and provided by a pair of UEs, as well as angle information between any one of the UEs and a LOS eNB according to example embodiments described herein;

Figure 7 illustrates a flow diagram of example operations occurring in a location server participating in position determination for a pair of UEs according to example embodiments described herein;

Figure 8 illustrates a flow diagram of example operations occurring in a first eNB participating in position determination of a pair of UEs according to example embodiments described herein;

Figure 9 illustrates a flow diagram of example operations occurring in a second eNB participating in position determination of a pair of UEs according to example embodiments described herein;

Figure 10 illustrates a flow diagram of example operations occurring in a first UE participating in position determination according to example embodiments described herein;

Figure 11 illustrates a flow diagram of example operations occurring in a second UE participating in position determination according to example embodiments described herein;

Figure 12 illustrates timelines of an example RTT measurement according to example embodiments described herein;

Figure 13 illustrates a diagram of transmissions made and processing performed by devices participating in determining RTT according to example embodiments described herein;

Figure 14 illustrates an example communication system according to example embodiments described herein;

Figures 15A and 15B illustrate example devices that may implement the methods and teachings according to this disclosure; and

Figure 16 is a block diagram of a computing system that may be used for implementing the devices and methods disclosed herein.

## DETAILED DESCRIPTION

The making and using of the presently examples are discussed in detail below. It should be appreciated, however, that the present disclosure provides many applicable inventive concepts that can be embodied in a wide variety of specific contexts. The specific examples discussed are merely illustrative of specific ways to make and use the examples, and do not limit the scope of the disclosure.

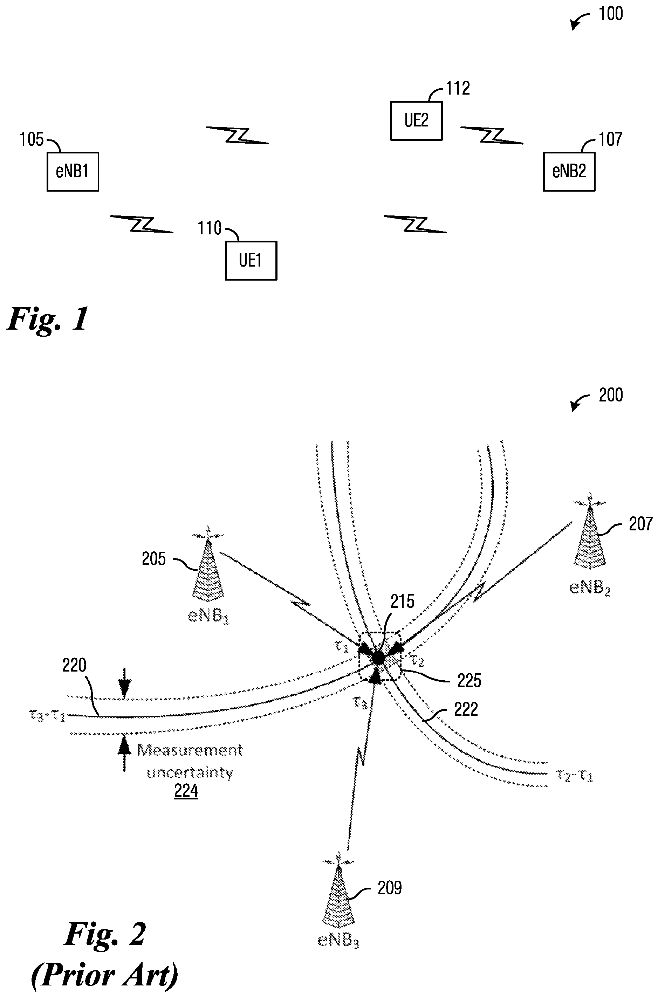

Figure 1 illustrates an example wireless communications system 100. Communications system 100 includes evolved NodeBs (eNBs), such as a first eNB (eNB1) 105 and a second eNB (eNB2) 107. The eNBs serve user equipment (UE), such as a first UE (UE1) 110 and a second UE (UE2) 112. In a cellular communications mode, communications intended for a UE or originating from a UE passes through an eNB that is serving the UE. As an illustrative example, communications intended for UE1 110 or originating from UE1 110 pass through eNB1 105. eNBs are also commonly referred to as NodeBs, gNode Bs (gNBs), master eNBs (MeNBs), secondary eNBs (SeNBs), master gNBs (MgNBs), secondary gNBs (SgNBs), base stations, access points, remote radio heads, and so on. Access nodes may be used as a more general term for eNBs, gNBs, NodeBs, MeNBs, SeNBs, MgNBs, SgNBs, base stations, access points, remote radio heads, and so on. Similarly, UEs are also commonly referred to as mobiles, mobile stations, stations, terminals, subscribers, users, and the like. While it is understood that communications systems may employ multiple eNBs capable of communicating with a number of UEs, only two eNBs, and two UEs are illustrated for simplicity.

An existing method for position determination of a communications device makes use of observed time difference of arrival (OTDOA) as measured by the communications device. The OTDOA is a measurement of the amount of time that it takes for a signal to travel from a signal source (such as an eNB) to the communications device. For a two-dimensional communications system, at least three reliable line of sight (LOS) measurements are needed to obtain a pair of coordinates for the communications device. For a three-dimensional communications system, at least four reliable LOS measurements are needed to obtain a triplet of coordinates for the communications device.

Figure 2 illustrates a communications system 200 highlighting the position determination of a communications device using the prior art OTDOA method. Communications system 200 includes eNBs, including a first eNB (eNB1) 205, a second eNB (eNB2) 207, and a third eNB (eNB3) 109. Communications system 200 also includes a UE 215, the position of which is to be determined using the prior art OTDOA method. Based on measurements of signals transmitted by the eNBs, UE 215 makes OTDOA measurements, including: the OTDOA for eNB1 205 $\tau_1$, the OTDOA for eNB2 207 $\tau_2$, and the OTDOA for eNB3 209 $\tau_3$. A first curve 220 represents potential locations of UE 215 based on a difference between $\tau_2$-$\tau_1$, and a second curve 222 represents potential locations of UE 215 based on a difference between $\tau_3$-$\tau_1$. A pair of dashed curves around each of first curve 220 and second curve 222 represent measurement uncertainty 224. The measurement uncertainty may be due to factors such as synchronization error, measurement error, quantization error, multipath error, timing offset error, and so on. An intersection 225 of first curve 220 and second curve 222 represents the position of UE 215. It is noted that due to the measurement uncertainty, the exact position of UE 215 may not be known.

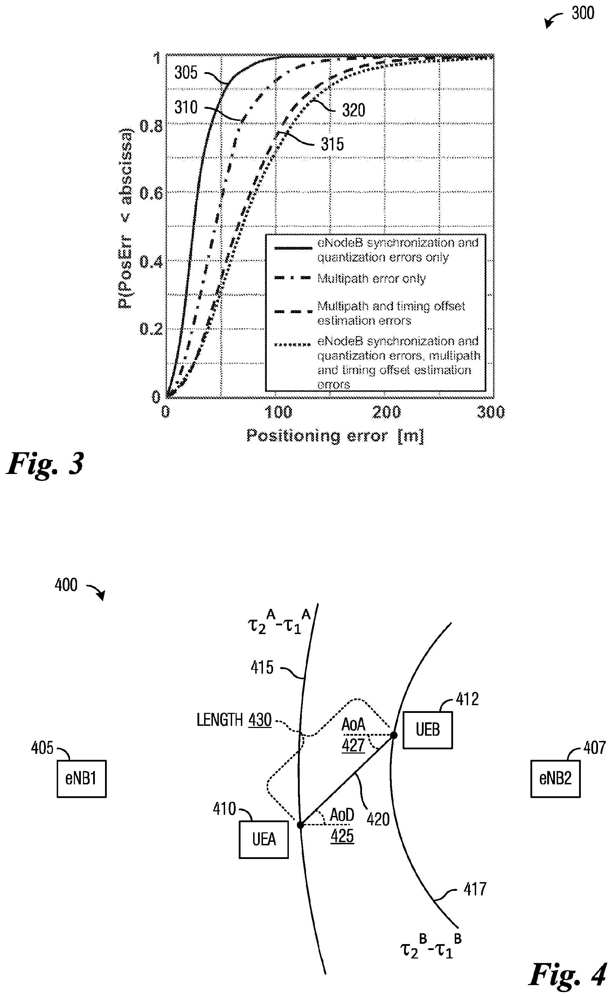

Figure 3 illustrates a plot 300 of an estimated position of a UE and the impact of measurement uncertainty on the estimated position. A first curve 305 represents the impact of eNB synchronization error and quantization error on the estimated position, a second curve 310 represents the impact of multipath error on the estimated position, a third curve 315 represents the impact of multipath error and timing offset error on the estimated position, and a fourth curve 320 represents the impact of eNB synchronization error, quantization error, multipath error, and timing offset error on the estimated position. As shown in Figure 3, multipath error has significant impact on the estimated position. Hence, multipath in the OTDOA measurements should be avoided.

It is noted that in many situations, it is difficult (if not impossible) to have three LOS eNBs. In such a situation, using non-LOS (NLOS) eNBs in the OTDOA measurements may introduce a significant amount of error in the estimated position of the UE. Therefore, there is a need to reduce the number of LOS eNBs to minimize or eliminate the need to use NLOS eNBs in the position determination of UEs.

According to an example example, a system and method for position determination using OTDOA measurements, inter-device measurement (IDM) generated and provided by a pair of UEs, as well as angle information between any one of the UEs and a LOS eNB is provided. The determination of the positions of the UEs using the OTDOA measurements, the IDM, and the angle information allows for a reduction in the number of LOS eNBs. In a two-dimensional communications system, only two LOS eNBs may be required, while in a three-dimensional communications system, only three LOS eNBs may be required. The determination of the positions of the pair of UEs is made in accordance with the OTDOA measurements, the IDM, as well as the angle information. The OTDOA measurements may be made by the UEs based on signals transmitted by the LOS eNBs, as discussed previously. It is noted that although the discussion focuses on LOS eNBs, the examples presented herein are also operable with NLOS eNBs. Therefore, the discussion of position determination with LOS eNBs should not be construed as being limiting to either the scope of the examples.

Examples of IDM include: round trip time (RTT) between the UEs in the pair of UEs; an angle of arrival (AoA) from a first UE to a second UE; and an angle of departure (AoD) from the first UE to the second UE. Any combination of the RTT, AoA, and AoD is referred to as IDMs. It is noted that either UE of the pair of UEs may measure the IDM based on signals transmitted by the other UE of the pair of UEs. However, the determination of the AoA and/or the AoD would require multiple receive antennas at the UE measuring the IDM. Furthermore, the RTT and either AoA or AoD are sufficient to allow for the determination of the positions of the UEs.

The angle information comprises angular information from one of the two UEs to one of the LOS eNBs, and angular information from one of the LOS eNBs to one of the two UEs. As an illustrative example, in the case of the angular information from one of the two UEs to one of the LOS eNBs, the UE performs an angular measurement on the one LOS eNB. As an illustrative example, in the case of the angular information from one of the two UEs to one of the LOS eNBs, one of the LOS eNBs simply performs an angle measurement. The angular information may be similar to a cell identifier (CID) that specifies an angle of the UE to the LOS eNB.

Figure 4 illustrates a communications system 400 highlighting the position determination of a pair of UEs utilizing OTDOA measurements and IDMs. Communications system 400 includes a first eNB (eNB1) 405 and a second eNB (eNB2) 407. Communications system 400 also includes a first UE (UEA) 410 and a second UE (UEB) 412. It is noted that eNB1 405 and eNB2 407 may or may not be LOS eNBs to UEA 410 and UEB 412. A first curve 415 represents potential UEA 410 locations based on a difference between OTDOA measurements made by UEA 410, e.g., OTDOA for eNB1 405 made by UEA 410 ($\tau_1^A$) and OTDOA for eNB2 407 made by UEA 410 ($\tau_2^A$). A second curve 417 represents potential UEB 412 locations based on a difference between OTDOA measurements made by UEB 412, e.g., OTDOA for eNB1 405 made by UEB 412 ($\tau_1^B$) and OTDOA for eNB2 407 made by UEB 412 ($\tau_2^B$). The two curves are hyperbolas sharing two common foci, which are the two eNBs. It is noted that without additional information, it may not be possible to accurately locate UEA 410 and UEB 412.

A line 420 represents IDM measured and reported by either UEA 410 or UEB 412 is used in conjunction with the OTDOA measurements to determine the positions of UEA 410 and UEB 412. Line 420 may be specified by either AoD 425 (relative to a known direction or angle, such as north, south, east, or west, for example) or AoA 427 (also relative to a known direction) and a length 430 that is specified by the RTT between UEA 410 and UEB 412. Line 420 may represent an AoD of +30 degrees relative to the east and a RTT of 3 ms, for example. Alternatively, line 420 may represent an AoA of -60 degrees relative to the west and a RTT of 3 ms, for example. As an illustrative example, the positions of UEA 410 and UEB 412 may be determined by moving line 420 along one of the curves (either first curve 415 or second curve 417) until a first end of line 420 is on a first of the curves and a second end of line 420 is on a second of the curves.

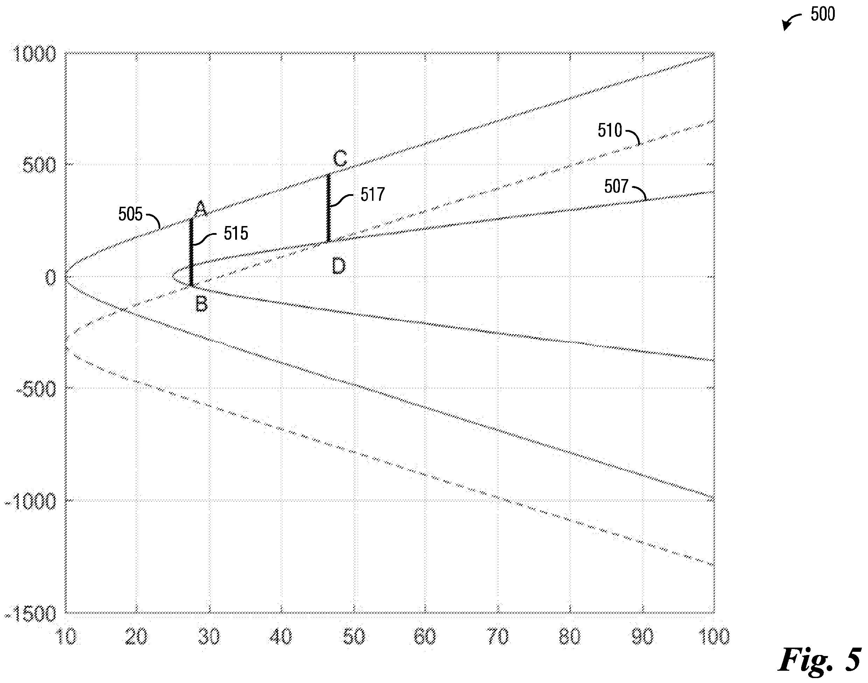

However, without the angle information, the positions of the UEs may be non-unique. Figure 5 illustrates a plot 500 highlighting the non-unique positions when only OTDOA measurements and IDM are used. Plot 500 includes a first curve 505 representing OTDOA measurements made by a first UE (e.g., UEA 410), and a second curve 507 representing OTDOA measurements made by a second UE (e.g., UEB 412). A third curve 510 is also shown and represents an alternative starting point for the positions of the pair of UEs.

A first line 515 represents the IDM and displays locations A and B for the pair of UEs. As an example, a first end of first line 515 may be placed on first curve 505 and moved along first curve 505 until a second end of first line 515 lands on second curve 507. However, a second line 517 also represents the IDM and displays locations C and D for the pair of UEs. Therefore, using only the OTDOA measurements and the IDM, each UE has two possible positions.

The angle information, comprising angular information from one of the two UEs to one of the LOS eNBs, and angular information from one of the LOS eNBs to one of the two UEs are used to determine which one of the non-unique positions is the actual position of the two UEs. At least one of the non-unique positions of the two UEs will conflict with the angle information and is eliminated. The position of the other UE that is paired with the eliminated position is also eliminated. As discussed previously, one or more the eNBs may be NLOS eNBs. The examples remain operable with measurements made using NLOS eNBs.

According to an example, the position determination using OTDOA measurements, inter-device measurement (IDM) generated and provided by a pair of UEs, as well as angle information between any one of the UEs and a LOS eNB, is performed by a location server. The location server may be a stand-alone entity in the communications system. Alternatively, the location server may be co-located with another entity in the communications system, such as an eNB, a communications controller, and so on. Alternatively, the location server may be a logical function implemented in an entity in the communications system, such as an eNB, a communications controller, and so on.

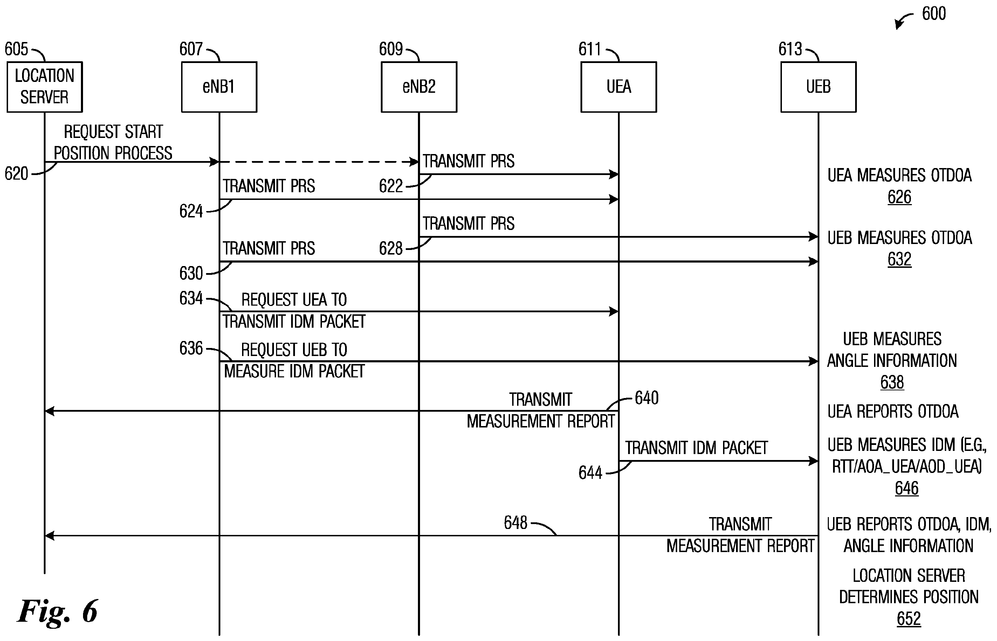

Figure 6 illustrates transmissions 600 made by devices participating in position determination for a pair of UEs using OTDOA measurements, inter-device measurement (IDM) generated and provided by a pair of UEs, as well as angle information between any one of the UEs and a LOS eNB. The transmissions shown in Figure 6 are made by devices, including a location server 605, a first eNB (eNB1) 607, a second eNB (eNB2) 609, a first UE (UEA) 611, and a second UE (UEB) 613, as the devices participate in the determining of the position of each UE in the pair of UEs.

Location server 605 sends a request to start the position determination process to eNB1 607 and eNB2 609 (event 620). Alternatively, the request is sent to one of the two eNBs and the request is forwarded to the other of the two eNBs by the eNB receiving the request from location server 605. One of the two eNBs, e.g., eNB1 607, transmits position reference signals (PRS) measurement requests to the two UEs to configure the two UEs to make OTDOA measurements. The PRS measurement requests may include network resource information that will be used to convey the PRSs, beamforming information if beamforming is used, and so on. The two eNBs transmit PRS to UEA 611 (events 622 and 624). UEA 611 makes OTDOA measurements in accordance with the PRS transmitted by the two eNBs (event 626). The two eNBs transmit PRS to UEB 613 (events 628 and 630). UEB 613 makes OTDOA measurements in accordance with the PRS transmitted by the two eNBs (event 632).

eNB1 607 transmits a request to UEA 611 to transmit an IDM packet, which is used by UEB 613 to make IDM measurements (event 634). eNB1 607 transmits a request to UEB 613 to make IDM measurements (event 636). UEB 613 makes the angle measurements relative to eNB1 607 in accordance with the request transmitted by eNB1 607 (event 638). In an alternative configuration, eNB2 609 requests UEA 611 to transmit the IDM packet and UEB 613 to make the IDM measurements. In yet another alternative example, eNB1 607 requests UEB 613 to transmit the IDM packet and UEA 611 to make the IDM measurements. In yet another alternative example, eNB2 609 requests UEB 613 to transmit the IDM packet and UEA 611 to make the IDM measurements. Either or both of the UEs may make the angle measurements.

UEA 611 transmits a measurement report (event 640). The measurement report includes the OTDOA measurement made by UEA 611. The measurement report may be transmitted to location server 605 or to either eNB1 607 or eNB2 609, which will then forward the measurement report to location server 605. UEA 611 transmits the IDM packet (event 644). UEB 613 makes the IDM measurement (event 646). The IDM measurement includes an RTT measurement, as well as AOA and/or AOD measurements relative to UEA 611.

UEB 613 transmits a measurement report (event 648). The measurement report may include the OTDOA measurement, the IDM measurement, and the angle information. Alternatively, if UEA 609 made the angle measurement, the measurement report transmitted by UEA 609 in event 640 includes the angle information. Location server 605 determines the positions of the two UEs in accordance with the OTDOA measurements, the IDM measurement, and the angle information (event 652).

As shown in Figure 6, the OTDOA measurements made by UEA 611 and UEB 613 and the IDM measurements occur at different times. Alternatively, the OTDOA measurements and the IDM measurements may occur at the same time or substantially at the same time, or a time difference between the two may be kept to a minimum. As an example, the PRS and the IDM packet may be transmitted simultaneously or sequentially immediately after each other to minimize the time difference between the two measurements. Alternatively, the PRS and the IDM may be transmitted in different frequency bands, so that they can occur at the same (or substantially the same) time.

Figure 6 illustrates a situation wherein eNB1 607 instructs UEA 611 to transmit the IDM packet and UEB 613 to make the IDM measurements. Alternative configurations exist, including (but not limited to):

- eNB1 607 instructs UEA 611 to transmit the IDM packet and eNB2 609 instructs UEB 613 to make the IDM measurements;
- eNB2 609 instructs UEA 611 to transmit the IDM packet and eNB1 607 instructs UEB 613 to make the IDM measurements;
- eNB2 609 instructs UEA 611 to transmit the IDM packet and UEB 613 to make the IDM measurements;
- eNB1 607 instructs UEB 613 to transmit the IDM packet and UEA 611 to make the IDM measurements;
- eNB1 607 instructs UEB 613 to transmit the IDM packet and eNB2 609 instructs UEA 611 to make the IDM measurements;
- eNB2 609 instructs UEB 613 to transmit the IDM packet and eNB1 607 instructs UEA 611 to make the IDM measurements; and
- eNB2 609 instructs UEB 613 to transmit the IDM packet and UEA to make the IDM measurements.

Similar alternative configurations exist with the UE making the angle measurements.

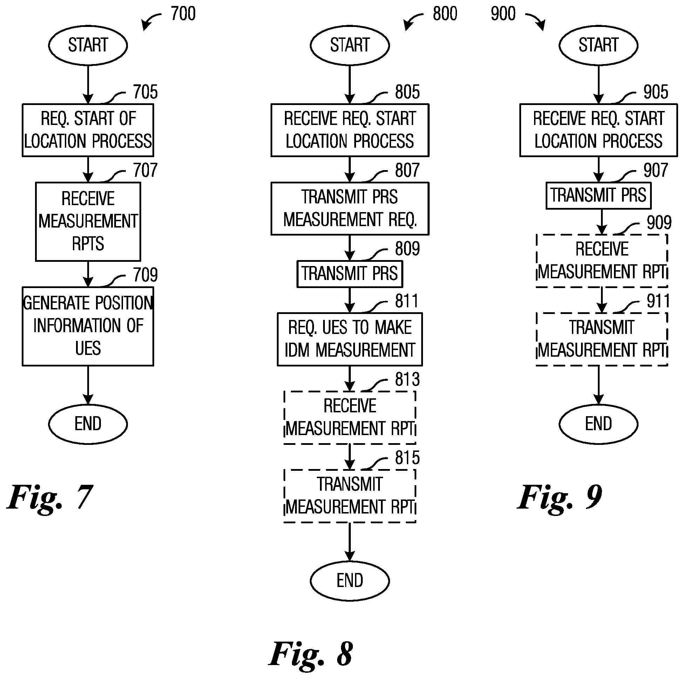

Figure 7 illustrates a flow diagram of example operations 700 occurring in a location server participating in position determination for a pair of UEs. Operations 700 may be indicative of operations occurring in a location server as the location server participates in determining the positions of a pair of UEs.

Operations 700 begin with the location server sending a request to start the position determination process (block 705). The request may be sent to one or both LOS eNBs of the two UEs. As discussed previously, the examples presented herein are also operable with NLOS eNBs. The location server receives measurement reports from the two UEs (block 707). The measurement reports may include OTDOA measurements, IDM measurements, angle information, or a combination thereof. The measurement report may be received from the UEs or they may be forwarded from one or both LOS eNBs. The location server generates position information of the UEs (block 709). The position information may be generated in accordance with the OTDOA measurement, the IDM measurements, and the angle information.

Figure 8 illustrates a flow diagram of example operations 800 occurring in a first eNB participating in position determination of a pair of UEs. Operations 800 may be indicative of operations occurring in a first eNB, such as eNB1 607, as the first eNB participates in determining the positions of a pair of UEs. As described herein, the first eNB is one of two LOS eNBs of the pair of UEs and is selected to operate as the eNB to initiate measurements. As discussed previously, the examples presented herein are also operable with NLOS eNBs.

Operations 800 begin with the first eNB receiving a request to start the position determination process (block 805). The request may be received from a location server. The first eNB transmits a PRS measurement request (block 807). The PRS measurement request may be transmitted to a first UE and a second UE. The first eNB transmits a PRS (block 809). The first eNB transmits a first PRS to the first UE and a second PRS to the second UE. The first eNB transmits a request to the UEs to make IDM measurements (block 811). Requesting the UEs to make IDM measurements may involve transmitting a first request to a first UE to have the first UE transmit an IDM packet and a second request to a second UE to have the second UE receive the IDM packet and make IDM measurements in accordance with the received IDM packet. The first eNB may receive a measurement report (block 813). The first eNB may transmit the measurement report to the location server (block 815). Alternatively, the measurement report may be addressed directly to the location server and the first eNB serves as an intermediary to the transport of the measurement report.

Figure 9 illustrates a flow diagram of example operations 900 occurring in a second eNB participating in position determination of a pair of UEs. Operations 900 may be indicative of operations occurring in a second eNB, such as eNB2 609, as the second eNB participates in determining the positions of a pair of UEs. As described herein, the second eNB is one of two LOS eNBs of the pair of UEs and is selected to operate as the eNB to participate in measurements without initiating the measurements. As discussed previously, the examples presented herein are also operable with NLOS eNBs.

Operations 900 begin with the second eNB receiving a request to start the position determination process (block 905). The request may be received from a location server. Alternatively, the second eNB may receive the request from a first eNB. The second eNB transmits a PRS (block 907). The second eNB transmits a first PRS to a first UE and a second PRS to a second UE. The second eNB may receive a measurement report (block 909). The second eNB may transmit the measurement report to the location server (block 911). Alternatively, the measurement report may be addressed directly to the location server and the second eNB serves as an intermediary to the transport of the measurement report.

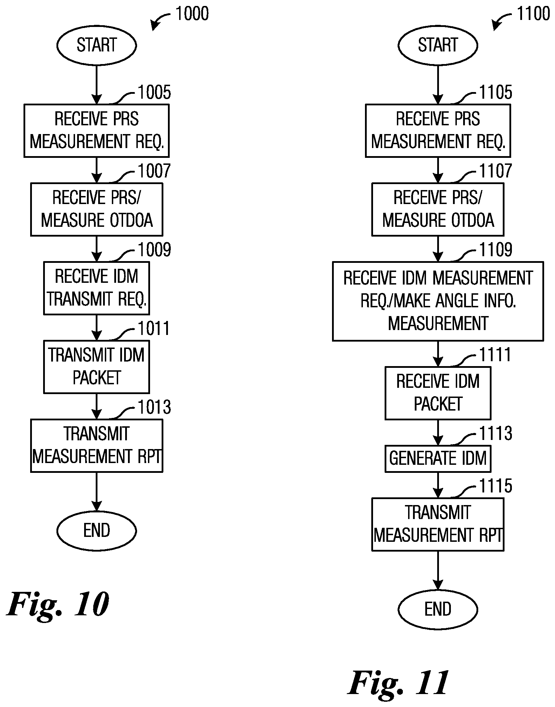

Figure 10 illustrates a flow diagram of example operations 1000 occurring in a first UE participating in position determination. Operations 1000 may be indicative of operations occurring in a first UE, such as UEA 611, as the first UE participates in determining the position of the first UE and a second UE. As described herein, the first UE is one of a pair of UEs and is selected to operate as the UE to transmit an IDM packet.

Operations 1000 begin with the first UE receiving a PRS measurement request (block 1005). The first UE receives a first PRS from a first eNB and a second PRS from a second eNB in accordance with the PRS measurement request (block 1007). The first UE uses the received PRS to make OTDOA measurements for the first eNB and the second eNB, including $\tau_1{}^A$ and $\tau_2{}^A$, respectively. The first UE receives a request to transmit an IDM packet (block 1009). The first UE transmits the IDM packet (block 1011). The first UE transmits a measurement report (block 1013). The measurement report includes the OTDOA measurements. The measurement report may be transmitted to the first eNB or the location server.

Figure 11 illustrates a flow diagram of example operations 1100 occurring in a second UE participating in position determination. Operations 1100 may be indicative of operations occurring in a second UE, such as UEB 613, as the second UE participates in determining the position of a first UE and the second UE. As described herein, the second UE is one of a pair of UEs and is selected to operate as the UE to make an IDM measurement and generate angle information.

Operations 1100 begin with the second UE receiving a PRS measurement request (block 1105). The second UE receives a first PRS from a first eNB and a second PRS from a second eNB in accordance with the PRS measurement request (block 1107). The first UE uses the received PRS to make OTDOA measurements for the first eNB and the second eNB, including $\tau_1{}^B$ and $\tau_2{}^B$, respectively. The second UE receives a request to make an IDM measurement and generate angle information (block 1109). The second UE may generate angle information in accordance with the received request. The second UE receives an IDM packet (block 1111). The second UE makes the IDM measurement in accordance with the IDM packet and generates IDM information (block 1113). The second UE transmits a measurement report (block 1115). The measurement report includes the OTDOA measurements, the IDM measurements, and the angle information. The measurement report may be transmitted to the first eNB or the location server.

It is noted that the flow diagrams illustrated in Figures 7-11 are consistent with a position determination configuration as shown in Figure 6, wherein the first eNB initiates measurements, the first UE makes only OTDOA measurements, and the second UE makes OTDOA measurements, IDM measurements, and angle information. Other position determination configurations are possible, and would result in small changes in the flow diagrams. Therefore, the discussion of Figures 6-11 should not be construed as being limiting to either the scope of the examples.

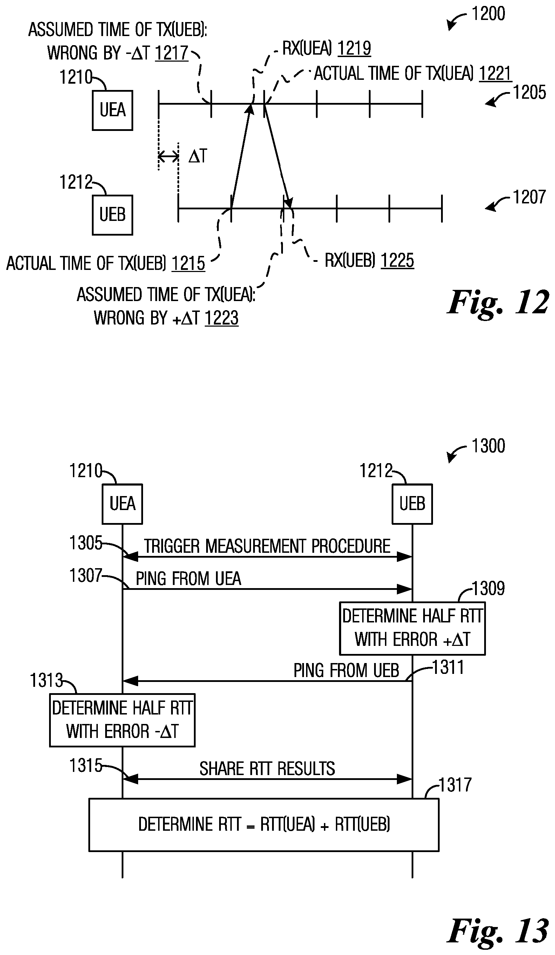

Figure 12 illustrates timelines 1200 of an example RTT measurement. Timelines 1200 include a first timeline 1205 of transmissions and receptions by a UEA 1210 and a second timeline 1207 of transmissions and receptions by a UEB 1212. As shown in Figure 12, there is a time difference of $\Delta T$ between first timeline 1205 and second timeline 1207 of timelines 1200. At a first time 1215, UEB 1212 makes a transmission (TX(UEB)). An assumed time 1217 for TX(UEB) in first timeline 1205 is wrong by -$\Delta T$, while TX(UEB) is received by UEA 1210 at time 1219 (RX(UEA)). At a second time 1221, UEA 1210 makes a transmission (TX(UEA)). An assumed time 1223 for TX(UEA) in second time line 1207 is wrong by +$\Delta T$, while TX(UEA) is received by UEB 1212 at time 1225 (RX(UEB)).

The time relationships between the transmit and receive times are expressible as:

$$RX(UEB) = TX(UEA) + 1/2\ RTT;$$

and

$$RX(UEA) = TX(UEB) + 1/2\ RTT.$$

It is assumed that each receiver assumes that the transmitter transmits on a transmit subframe boundary according to the timeline of the receiver. Therefore, the RTT, as determined by each UE is expressible as:

$$1/2\ RTT = RX(UEA) - TX(UEB) - \Delta T;$$

and

$$1/2\ RTT = RX(UEB) - TX(UEA) + \Delta T.$$

Figure 13 illustrates a diagram 1300 of transmissions made and processing performed by devices participating in determining RTT. Diagram 1300 displays transmissions made and processing performed by UEA 1210 and UEB 1212 as the devices participate in determining RTT. UEA 1210 and UEB 1212 trigger a measurement procedure (event 1305). Triggering the measurement procedure may include an exchange of messages between the UEs, exchanging information, such as network resources used to convey messages used in the measurement procedure, which UE would start the measurement procedure, timing information, and so on. UEA 1210 makes a transmission to UEB 1212 (event 1307). The transmission may be a ping message or any other transmission of control or data, for example. UEB 1212 determines a 1/2 RTT with an error of $+\Delta T$ based on the transmission made by UEA 1210 (block 1309). UEB 1212 makes a transmission to UEA 1210 (event 1311). The transmission may be another ping message or any other transmission of control or data, for example. UEA 1210 determines a 1/2 RTT with an error of $-\Delta T$ (block 1313). The two UEs share the 1/2 RTT results (event 1315). Each UE determines the RTT result from the shared 1/2 RTT results (block 1317). As an example, RTT = 1/2 $RTT_{UEA}$ + 1/2 $RTT_{UEB}$.

It is noted that if $\Delta T$ = 0, e.g., both UEs are synchronized to the same timeline, then the 1/2 RTT results do not need to be exchanged. In such a situation, each UE can determine its respective 1/2 RTT result independently and simply double the value to obtain RTT. However, the situation where $\Delta T$ = 0 depends upon exact synchronization. As an example, if the UEs are synchronized to a single eNB but have different timing advance (TA) values, the UEs would need to exchange the TA values. As an example, the TA values may be included in the ping messages. The UEs may then determine the $\Delta T$ value from a difference of the two TA values.

As discussed previously, the examples presented herein are also operable in three-dimensional communications systems. In three-dimensional communications systems, two UEs and three LOS eNBs may be required. The two UEs make OTDOA measurements with different pairings of the three LOS eNBs, with the OTDOA measurements corresponding to a three-dimensional hyperbolic shape. With regard to the IDMs, each UE may measure two AoA and/or two AoD. As an example, a first AoA of a first UE corresponds to a horizontal AoA and a second AoA of the first UE corresponds to a vertical AoA. Similarly, a first AoD of the first UE corresponds to a horizontal AoD and a second AoD of the first UE corresponds to a vertical AoD. The second UE may also have corresponding AoA and/or AoD measurements. It is noted that horizontal and vertical axes are used herein for discussion purposes and any other pairing of orthogonal axes may be used. In order to determine the positions of the two UEs, the location server makes use of OTDOA measurements, the IDMs (including the RTT measurement and a combination of at least any two of the AoA/AoD measurements provided by the two UEs), and the angle information.

In a first aspect, the present application provides a method for a method for user device position determination. The method includes initiating, by a location server, a location determination process, receiving, by the location server, measurement reports originating from at least two user devices, the measurement reports include observed time difference of arrival (OTDOA) measurements associated with at least two access nodes, inter-device measurements (IDMs) among the at least two user devices, and angle information associated with the at least two access nodes, and determining, by the location server, positions of the at least two user devices in accordance with the OTDOA measurements associated with the at least two access nodes, the IDMs, and the angle information associated with the at least two access nodes.

According to a first example of the method according to the first aspect, initiating the location determination process includes transmitting a location determining request to at least one of the at least two access nodes. According to a second example of the method according to any preceding example of the first aspect or the first aspect as such, the IDMs include a RTT measurement, and at least one of an AoA from a first user device to a second user device, an AoD from the first user device to the second user device, an AoA from the second user device to the first user device, or an AoD from the second user device to the first user device. According to a third example of the method according to any preceding example of the first aspect or the first aspect as such, the IDMs include a RTT measurement, and at least two of a first AoA from a first user device to a second user device, a second AoA from the first user device to the second user device, a third AoA from the second user device to the first user device, a fourth AoA from the second user device to the first user device, a first AoD from the first user device to the second user device, a second AoD from the first user device to the second user device, a third AoD from the second user device to the first user device, or a fourth AoD from the second user device to the first user device.

According to a fourth example of the method according to any preceding example of the first aspect or the first aspect as such, an OTDOA measurement includes a difference between a first arrival time from a first access node to a first user device and a second arrival time from a second access node to the first user device. According to a fifth example of the method according to any preceding example of the first aspect or the first aspect as such, the angle information includes first angular information from one of the at least two user devices to one of the at least two access nodes, and second angular information from one of the at least two access nodes to one of the at least two user devices. According to a sixth example of the method according to any preceding example of the first aspect or the first aspect as such, determining the positions of the at least two user devices includes determining, by the location server, a plurality of positions of the at least two user devices in accordance with the OTDOA measurements and the IDMs, and selecting, by the location server, the positions of the at least two user devices from the plurality of positions, in accordance with the angle information.

In a second aspect, the present application provides a method for user device position determination is provided. The method includes receiving, by a first access node, a request for initiating a location determination process, transmitting, by the first access node, positioning reference signals (PRSs) to at least two user devices, and initiating, by the first access node, an IDM at the at least two user devices.

According to a first example of the method according to the second aspect, the method includes configuring, by the first access node, a second access node to participate in the location determination process. According to a second example of the method according to any preceding example of the second aspect or the second aspect as such, initiating the IDM includes transmitting, by the first access node, a transmit IDM packet request to a first user device, and transmitting, by the first access node, a make an IDM request to a second user device. According to a third example of the method according to any preceding example of the second aspect or the second aspect as such, the method includes receiving, by the first access node, at least one measurement report including OTDOA measurements associated with the first access node and a second access node, IDMs, and angle information associated with the first access node and a second access node, and transmitting, by the first access node, the at least one measurement report to a location server.

According to a fourth example of the method according to any preceding example of the second aspect or the second aspect as such, the method includes configuring, by the first access node, the at least two user devices to make OTDOA measurements. According to a fifth example of the method according to any preceding example of the second aspect or the second aspect as such, onfiguring the at least two user devices to make the OTDOA measurements includes transmitting resource allocation information regarding a resource used to convey the PRSs.

In a third aspect, the present application provides a location server adapted to determine user device position. The location server includes one or more processors, and a computer readable storage medium storing programming for execution by the one or more processors. The programming including instructions to configure the location server to initiate a location determination process, receive measurement reports originating from at least two user devices, the measurement reports include OTDOA measurements associated with at least two access nodes, IDMs among the at least two user devices, and angle information associated with the at least two access nodes, and determine positions of the at least two user devices in accordance with the OTDOA measurements associated with the at least two access nodes, the IDMs, and the angle information associated with the at least two access nodes.

According to a first example of the location server according to the third aspect, the programming includes instructions to configure the location server to a location determining request to at least one of the at least two access nodes. According to a second example of the location server according to any preceding example of the third aspect or the third aspect as such, the programming includes instructions to configure the location server to determine a plurality of positions of the at least two user devices in accordance with the OTDOA measurements and the IDMs, and select the positions of the at least two user devices from the plurality of positions, in accordance with the angle information. According to a third example of the location server according to any preceding example of the third aspect or the third aspect as such, the location server is one of a stand-alone network entity, co-located with a first network entity, or a logical function implemented in a second network entity.

In a fourth aspect, the present application provides a first access node adapted to determine user device position. The first access node includes one or more processors, and a computer readable storage medium storing programming for execution by the one or more processors. The programming including instructions to configure the first access node to receive a request for initiating a location determination process, transmit PRSs to at least two user devices, and initiate an inter-device measurement (IDM) at the at least two user devices.

According to a first example of the first access node according to the fourth aspect, the programming includes instructions to configure the first access node to configure a second access node to participate in the location determination process. According to a second example of the first access node according to any preceding example of the fourth aspect or the third aspect as such, the programming includes instructions to configure the first access node to transmit a transmit IDM packet request to a first user device, and transmit a make an IDM request to a second user device.

According to a third example of the first access node according to any preceding example of the fourth aspect or the third aspect as such, the programming includes instructions to configure the first access node to receive at least one measurement report including OTDOA measurements associated with the first access node and a second access node, IDMs, and angle information associated with the first access node and a second access node, and transmit the at least one measurement report to a location server.

According to a fourth example of the first access node according to any preceding example of the fourth aspect or the third aspect as such, he programming includes instructions to configure the first access node to configure the at least two user devices to make OTDOA measurements. According to a fifth example of the first access node according to any preceding example of the fourth aspect or the third aspect as such, he programming includes instructions to configure the first access node to transmit resource allocation information regarding a resource used to convey the PRSs.

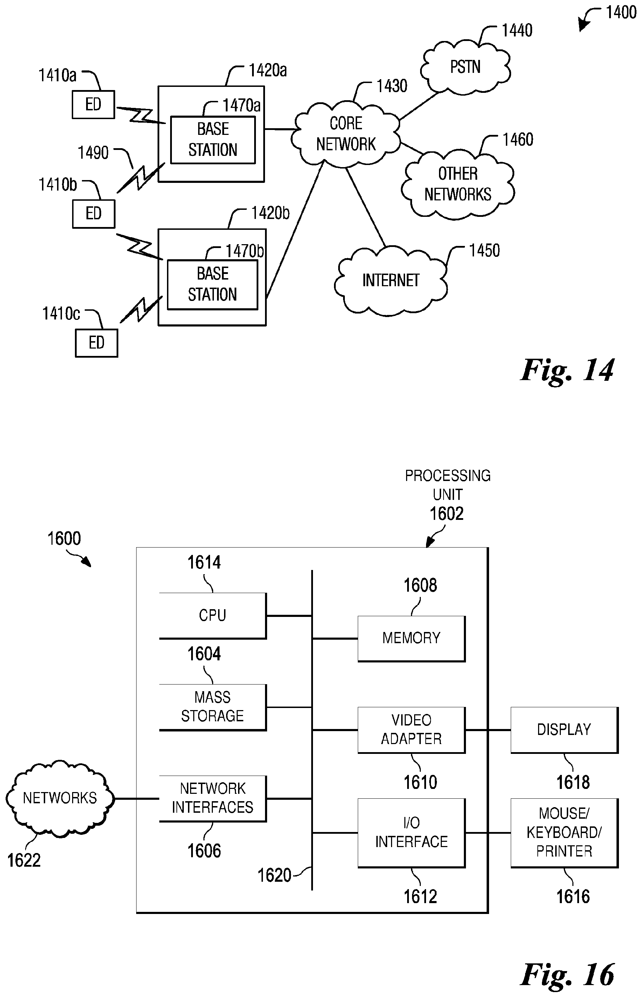

Figure 14 illustrates an example communication system 1400. In general, the system 1400 enables multiple wireless or wired users to transmit and receive data and other content. The system 1400 may implement one or more channel access methods, such as code division multiple access (CDMA), time division multiple access (TDMA), frequency division multiple access (FDMA), orthogonal FDMA (OFDMA), or single-carrier FDMA (SC-FDMA).

In this example, the communication system 1400 includes electronic devices (ED) 1410a-1410c, radio access networks (RANs) 1420a-1420b, a core network 1430, a public switched telephone network (PSTN) 1440, the Internet 1450, and other networks 1460. While certain numbers of these components or elements are shown in Figure 14, any number of these components or elements may be included in the system 1400.

The EDs 1410a-1410c are configured to operate and/or communicate in the system 1400. For example, the EDs 1410a-1410c are configured to transmit and/or receive via wireless or wired communication channels. Each ED 1410a-1410c represents any suitable end user device and may include such devices (or may be referred to) as a user equipment/device (UE), wireless transmit/receive unit (WTRU), mobile station, fixed or mobile subscriber unit, cellular telephone, personal digital assistant (PDA), smartphone, laptop, computer, touchpad, wireless sensor, or consumer electronics device.

The RANs 1420a-1420b here include base stations 1470a-1470b, respectively. Each base station 1470a-1470b is configured to wirelessly interface with one or more of the EDs 1410a-1410c to enable access to the core network 1430, the PSTN 1440, the Internet 1450, and/or the other networks 1460. For example, the base stations 1470a-1470b may include (or be) one or more of several well-known devices, such as a base transceiver station (BTS), a Node-B (NodeB), an evolved NodeB (eNodeB), a Home NodeB, a Home eNodeB, a site controller, an access point (AP), or a wireless router. The EDs 1410a-1410c are configured to interface and communicate with the Internet 1450 and may access the core network 1430, the PSTN 1440, and/or the other networks 1460.

In the example shown in Figure 14, the base station 1470a forms part of the RAN 1420a, which may include other base stations, elements, and/or devices. Also, the base station 1470b forms part of the RAN 1420b, which may include other base stations, elements, and/or devices. Each base station 1470a-1470b operates to transmit and/or receive wireless signals within a particular geographic region or area, sometimes referred to as a "cell." In some examples, multiple-input multiple-output (MIMO) technology may be employed having multiple transceivers for each cell.

The base stations 1470a-1470b communicate with one or more of the EDs 1410a-1410c over one or more air interfaces 1490 using wireless communication links. The air interfaces 1490 may utilize any suitable radio access technology.

It is contemplated that the system 1400 may use multiple channel access functionality, including such schemes as described above. In particular examples, the base stations and EDs implement LTE, LTE-A, and/or LTE-B. Of course, other multiple access schemes and wireless protocols may be utilized.

The RANs 1420a-1420b are in communication with the core network 1430 to provide the EDs 1410a-1410c with voice, data, application, Voice over Internet Protocol (VoIP), or other services. Understandably, the RANs 1420a-1420b and/or the core network 1430 may be in direct or indirect communication with one or more other RANs (not shown). The core network 1430 may also serve as a gateway access for other networks (such as the PSTN 1440, the Internet 1450, and the other networks 1460). In addition, some or all of the EDs 1410a-1410c may include functionality for communicating with different wireless networks over different wireless links using different wireless technologies and/or protocols. Instead of wireless communication (or in addition thereto), the EDs may communicate via wired communication channels to a service provider or switch (not shown), and to the Internet 1450.

Although Figure 14 illustrates one example of a communication system, various changes may be made to Figure 14. For example, the communication system 1400 could include any number of EDs, base stations, networks, or other components in any suitable configuration.

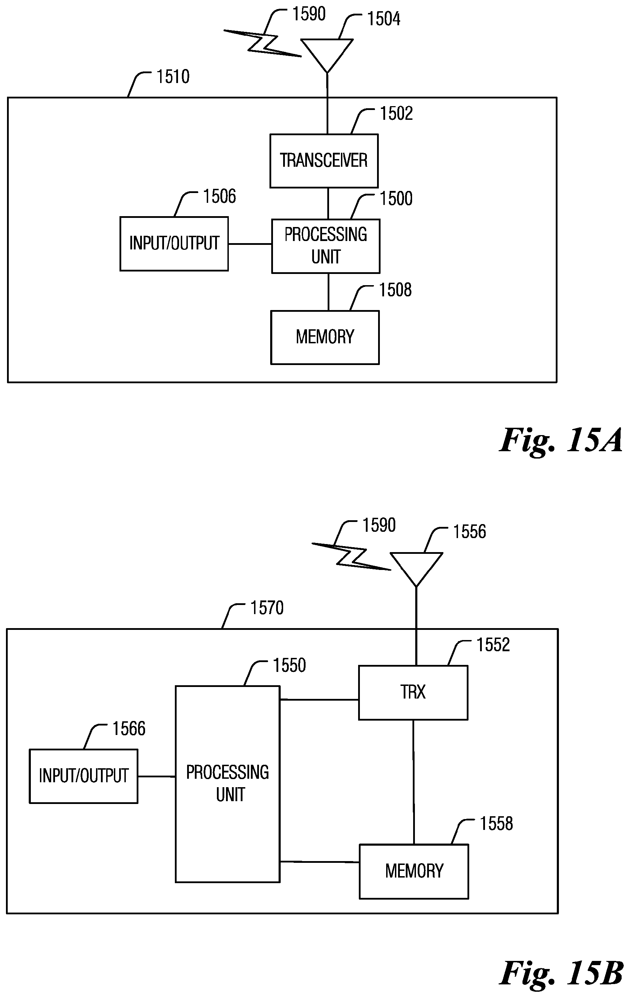

Figures 15A and 15B illustrate example devices that may implement the methods and teachings according to this disclosure. In particular, Figure 15A illustrates an example ED 1510, and Figure 15B illustrates an example base station 1570. These components could be used in the system 1400 or in any other suitable system.

As shown in Figure 15A, the ED 1510 includes at least one processing unit 1500. The processing unit 1500 implements various processing operations of the ED 1510. For example, the processing unit 1500 could perform signal coding, data processing, power control, input/output processing, or any other functionality enabling the ED 1510 to operate in the system 1400. The processing unit 1500 also supports the methods and teachings described in more detail above. Each processing unit 1500 includes any suitable processing or computing device configured to perform one or more operations. Each processing unit 1500 could, for example, include a microprocessor, microcontroller, digital signal processor, field programmable gate array, or application specific integrated circuit.

The ED 1510 also includes at least one transceiver 1502. The transceiver 1502 is configured to modulate data or other content for transmission by at least one antenna or NIC (Network Interface Controller) 1504. The transceiver 1502 is also configured to demodulate data or other content received by the at least one antenna 1504. Each transceiver 1502 includes any suitable structure for generating signals for wireless or wired transmission and/or processing signals received wirelessly or by wire. Each antenna 1504 includes any suitable structure for transmitting and/or receiving wireless or wired signals. One or multiple transceivers 1502 could be used in the ED 1510, and one or multiple antennas 1504 could be used in the ED 1510. Although shown as a single functional unit, a transceiver 1502 could also be implemented using at least one transmitter and at least one separate receiver.

The ED 1510 further includes one or more input/output devices 1506 or interfaces (such as a wired interface to the Internet 1450). The input/output devices 1506 facilitate interaction with a user or other devices (network communications) in the network. Each input/output device 1506 includes any suitable structure for providing information to or receiving/providing information from a user, such as a speaker, microphone, keypad, keyboard, display, or touch screen, including network interface communications.

In addition, the ED 1510 includes at least one memory 1508. The memory 1508 stores instructions and data used, generated, or collected by the ED 1510. For example, the memory 1508 could store software or firmware instructions executed by the processing unit(s) 1500 and data used to reduce or eliminate interference in incoming signals. Each memory 1508 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 15B, the base station 1570 includes at least one processing unit 1550, at least one transceiver 1552, which includes functionality for a transmitter and a receiver, one or more antennas 1556, at least one memory 1558, and one or more input/output devices or interfaces 1566. A scheduler, which would be understood by one skilled in the art, is coupled to the processing unit 1550. The scheduler could be included within or operated separately from the base station 1570. The processing unit 1550 implements various processing operations of the base station 1570, such as signal coding, data processing, power control, input/output processing, or any other functionality. The processing unit 1550 can also support the methods and teachings described in more detail above. Each processing unit 1550 includes any suitable processing or computing device configured to perform one or more operations. Each processing unit 1550 could, for example, include a microprocessor, microcontroller, digital signal processor, field programmable gate array, or application specific integrated circuit.

Each transceiver 1552 includes any suitable structure for generating signals for wireless or wired transmission to one or more EDs or other devices. Each transceiver 1552 further includes any suitable structure for processing signals received wirelessly or by wire from one or more EDs or other devices. Although shown combined as a transceiver 1552, a transmitter and a receiver could be separate components. Each antenna 1556 includes any suitable structure for transmitting and/or receiving wireless or wired signals. While a common antenna 1556 is shown here as being coupled to the transceiver 1552, one or more antennas 1556 could be coupled to the transceiver(s) 1552, allowing separate antennas 1556 to be coupled to the transmitter and the receiver if equipped as separate components. Each memory 1558 includes any suitable volatile and/or non-volatile storage and retrieval device(s). Each input/output device 1366 facilitates interaction with a user or other devices (network communications) in the network. Each input/output device 1566 includes any suitable structure for providing information to or receiving/providing information from a user, including network interface communications.

Figure 16 is a block diagram of a computing system 1600 that may be used for implementing the devices and methods disclosed herein. For example, the computing system can be any entity of UE, AN, MM, SM, UPGW, AS. Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1600 includes a processing unit 1602. The processing unit includes a central processing unit (CPU) 1614, memory 1608, and may further include a mass storage device 1604, a video adapter 1610, and an I/O interface 1612 connected to a bus 1620.

The bus 1620 may be one or more of any type of several bus architectures including a memory bus or memory controller, a peripheral bus, or a video bus. The CPU 1614 may comprise any type of electronic data processor. The memory 1608 may comprise any type of non-transitory system memory such as static random access memory (SRAM), dynamic random access memory (DRAM), synchronous DRAM (SDRAM), read-only memory (ROM), or a combination thereof. In an example, the memory 1608 may include ROM for use at boot-up, and DRAM for program and data storage for use while executing programs.

The mass storage 1604 may comprise any type of non-transitory storage device configured to store data, programs, and other information and to make the data, programs, and other information accessible via the bus 1620. The mass storage 1604 may comprise, for example, one or more of a solid state drive, hard disk drive, a magnetic disk drive, or an optical disk drive.

The video adapter 1610 and the I/O interface 1612 provide interfaces to couple external input and output devices to the processing unit 1602. As illustrated, examples of input and output devices include a display 1618 coupled to the video adapter 1610 and a mouse/keyboard/printer 1616 coupled to the I/O interface 1612. Other devices may be coupled to the processing unit 1602, and additional or fewer interface cards may be utilized. For example, a serial interface such as Universal Serial Bus (USB) (not shown) may be used to provide an interface for an external device.

The processing unit 1602 also includes one or more network interfaces 1606, which may comprise wired links, such as an Ethernet cable, and/or wireless links to access nodes or different networks. The network interfaces 1606 allow the processing unit 1602 to communicate with remote units via the networks. For example, the network interfaces 1606 may provide wireless communication via one or more transmitters/transmit antennas and one or more receivers/receive antennas. In an example, the processing unit 1602 is coupled to a local-area network 1622 or a wide-area network for data processing and communications with remote devices, such as other processing units, the Internet, or remote storage facilities.

It should be appreciated that one or more steps of the example methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by an initiating unit/module, a determining unit/module, a selecting unit/module, and/or a configuring unit/module. The respective units/modules may be hardware, software, or a combination thereof. For instance, one or more of the units/modules may be an integrated circuit, such as field programmable gate arrays (FPGAs) or application-specific integrated circuits (ASICs).

**Claims**

1. A method for user device position determination, the method comprising:

   initiating, by a location server (605), a location determination process;
   receiving, by the location server (605), measurement reports originating from at least a first and a second user devices (110, 112, 410, 412, 611, 613), the measurement reports include observed time difference of arrival, OTDOA, measurements associated with at least a first and second access nodes (105, 107, 405, 407, 409, 607, 609), inter-device measurements, IDMs, among the at least first and second user devices (110, 112, 410, 412, 611, 613), and angle information associated with the at least first and second access nodes (105, 107, 405, 407, 409, 607, 609); and
   determining, by the location server (605), positions of the at least first and second user devices (110, 112, 410, 412, 611, 613) in accordance with the OTDOA measurements associated with the at least first and second access nodes (105, 107, 405, 407, 409, 607, 609), the IDMs, and the angle information associated with the at least first and second access nodes (105, 107, 405, 407, 409, 607, 609),
   wherein the angle information associated with the at least first and second access nodes (105, 107, 405, 407, 409, 607, 609) comprises first angular information from one of the at least first and second user devices (110, 112, 410, 412, 611, 613) to one of the at least first and second access nodes (105, 107, 405, 407, 409, 607, 609), and second angular information from one of the at least first and second access nodes (105, 107, 405, 407, 409, 607, 609) to one of the at least first and second user devices (110, 112, 410, 412, 611, 613), and
   wherein determining the positions of the at least first and second user devices (110, 112, 410, 412, 611, 613) comprises:

   determining, by the location server (605), a plurality of positions of the at least first and second user devices (110, 112, 410, 412, 611, 613) in accordance with the OTDOA measurements and the IDMs; and
   selecting, by the location server (605), the positions of the at least first and second user devices (110, 112, 410, 412, 611, 613) from the plurality of positions, in accordance with the angle information associated with the at least first and second access nodes (105, 107, 405, 407, 409, 607, 609), and wherein
   the at least first and second user devices (110, 112, 410, 412, 611, 613) are two user equipments, UEs,
   the at least first and second access nodes (105, 107, 405, 407, 409, 607, 609) are reliable line of sight, LOS, eNBs,
   the angle information comprises the first and second angular information from one of the two UEs to one of the LOS eNBs, and the first or second angular information from one of the LOS eNBs to one of the two UEs is used to determine which one of non-unique positions from the plurality of positions is the actual position of the two UEs, wherein at least one of the non-unique positions of the two UEs conflicts with the first or second angle information and is eliminated, and a position of the other UE that is paired with the eliminated position is also eliminated.

2. The method of claim 1, wherein the IDMs comprise a round trip time, RTT, measurement, and at least one of an angle of arrival, AoA, from the first user device (110, 410, 611) to the second user device (112, 412, 613), an angle of departure, AoD, from the first user device (110, 410, 611) to the second user device (112, 412, 613), an AoA from the second user device (112, 412, 613) to the first user device (110, 410, 611), or an AoD from the second user device (112, 412, 613) to the first user device (110, 410, 611).

3. The method of claim 1, wherein the IDMs comprise a RTT measurement, and at least two of a first AoA from the first user device (110, 410, 611) to the second user device (112, 412, 613), a second AoA from the first user device (110, 410, 611) to the second user device (112, 412, 613), a third AoA from the second user device (112, 412, 613) to the first user device (110, 410, 611), a fourth AoA from the second user device (112, 412, 613) to the first user device (110, 410, 611), a first AoD from the first user device (110, 410, 611) to the second user device (112, 412, 613), a second AoD from the first user device (110, 410, 611) to the second user device (112, 412, 613), a third AoD from the second user device (112, 412, 613) to the first user device (110, 410, 611), or a fourth AoD from the second user device (112, 412, 613) to the first user device (110, 410, 611).

4. A method for user device position determination, the method comprising:

receiving, by a first access node (105, 405, 607), a request for initiating a location determination process;
transmitting, by the first access node (105, 405, 607), positioning reference signals, PRSs, to at least a first and a second user devices (110, 112, 410, 412, 611, 613);
initiating, by the first access node (105, 405, 607), an inter-device measurement, IDM, at the at least first and second user devices (110, 112, 410, 412, 611, 613);
receiving, by the first access node (105, 405, 607), at least one measurement report including observed time difference of arrival, OTDOA, measurements associated with the first access node (105, 405, 607) and a second access node (107, 407, 609), inter-device measurements, IDMs, and angle information associated with the first access node (105, 405, 607) and the second access node (107, 407, 609); and
transmitting, by the first access node (105, 405, 607), the at least one measurement report to a location server (605),
wherein the angle information associated with the at least first and second access nodes (105, 107, 405, 407, 409, 607, 609) comprises first angular information from one of the at least first and second user devices (110, 112, 410, 412, 611, 613) to one of the at least first and second access nodes (105, 107, 405, 407, 409, 607, 609), and second angular information from one of the at least first and second access nodes (105, 107, 405, 407, 409, 607, 609) to one of the at least first and second user devices (110, 112, 410, 412, 611, 613), and
wherein determining the positions of the at least first and second user devices (110, 112, 410, 412, 611, 613) comprises:

determining, by the location server (605), a plurality of positions of the at least first and second user devices (110, 112, 410, 412, 611, 613) in accordance with the OTDOA measurements and the IDMs; and
selecting, by the location server (605), the positions of the at least first and second user devices (110, 112, 410, 412, 611, 613) from the plurality of positions, in accordance with the angle information associated with the at least first and second access nodes (105, 107, 405, 407, 409, 607, 609) and
wherein
the at least first and second user devices (110, 112, 410, 412, 611, 613) are two user equipments, UEs,
the at least first and second access nodes (105, 107, 405, 407, 409, 607, 609) are reliable line of sight, LOS, eNBs,
the angle information comprises the first and second angular information from one of the two UEs to one of the LOS eNBs, and the first or second angular information from one of the LOS eNBs to one of the two UEs is used to determine which one of non-unique positions from the plurality of positions is the actual position of the two UEs, wherein at least one of the non-unique positions of the two UEs conflicts with the first or second angle information and is eliminated, and a position of the other UE that is paired with the eliminated position is also eliminated.

5. The method of claim 4, wherein initiating the IDM comprises:

transmitting, by the first access node (105, 405, 607), a transmit IDM packet request to the first user device (110, 410, 611); and
transmitting, by the first access node (105, 405, 607), a make an IDM request to the second user device (112, 412, 613).

6. The method of claim 4, further comprising configuring, by the first access node (105, 405, 607), the at least first and second user devices (110, 112, 410, 412, 611, 613) to make OTDOA measurements;
wherein configuring the at least first and second user devices (110, 112, 410, 412, 611, 613) to make the OTDOA measurements comprises transmitting resource allocation information regarding a resource used to convey the PRSs.

7. A location server (605) adapted to determine user device position, the location server (605) comprising:

   one or more processors; and
   a computer readable storage medium storing programming for execution by the one or more processors, the programming including instructions to configure the location server (605) to:

   initiate a location determination process,
   receive measurement reports originating from at least a first and a second user devices (110, 112, 410, 412, 611, 613), the measurement reports include observed time difference of arrival, OTDOA, measurements associated with at least a first and a second access nodes (105, 107, 405, 407, 409, 607, 609), inter-device measurements, IDMs, among the at least first and second user devices (110, 112, 410, 412, 611, 613), and angle information associated with the at least first and second access nodes (105, 107, 405, 407, 409, 607, 609), and

   determine positions of the at least first and second user devices (110, 112, 410, 412, 611, 613) in accordance with the OTDOA measurements associated with the at least first and second access nodes (105, 107, 405, 407, 409, 607, 609), the IDMs, and the angle information associated with the at least first and second access nodes (105, 107, 405, 407, 409, 607, 609), wherein the angle information associated with the at least first and second access nodes (105, 107, 405, 407, 409, 607, 609) comprises first angular information from one of the at least first and second user devices (110, 112, 410, 412, 611, 613) to one of the at least first and second access nodes (105, 107, 405, 407, 409, 607, 609), and second angular information from one of the at least first and second access nodes (105, 107, 405, 407, 409, 607, 609) to one of the at least first and second user devices (110, 112, 410, 412, 611, 613), and
   wherein determining the positions of the at least first and second user devices (110, 112, 410, 412, 611, 613) comprises:

   determining, by the location server (605), a plurality of positions of the at least first and second user devices (110, 112, 410, 412, 611, 613) in accordance with the OTDOA measurements and the IDMs; and

   selecting, by the location server (605), the positions of the at least first and second user devices (110, 112, 410, 412, 611, 613) from the plurality of positions, in accordance with the angle information associated with the at least first and second access nodes (105, 107, 405, 407, 409, 607, 609),
   wherein
   the at least first and second user devices (110, 112, 410, 412, 611, 613) are two user equipments, UEs,
   the at least first and second access nodes (105, 107, 405, 407, 409, 607, 609) are reliable line of sight, LOS, eNBs,
   the angle information comprises the first and second angular information from one of the two UEs to one of the LOS eNBs, and the first or second angular information from one of the LOS eNBs to one of the two UEs is used to determine which one of non-unique positions from the plurality of positions is the actual position of the two UEs, wherein at least one of the non-unique positions of the two UEs conflicts with the first or second angle information and is eliminated, and a position of the other UE that is paired with the eliminated position is also eliminated.

8. The location server (605) of claim 7, wherein the programming includes instructions to configure the location server (605) to a location determining request to at least one of the at least first and second access nodes (105, 107, 405, 407, 409, 607, 609).

9. The location server (605) of claim 7, wherein the programming includes instructions to configure the location server (605) to determine a plurality of positions of the at least first and second user devices (110, 112, 410, 412, 611, 613) in accordance with the OTDOA measurements and the IDMs, and select the positions of the at least first and second user devices (110, 112, 410, 412, 611, 613) from the plurality of positions, in accordance with the angle information.

10. The location server (605) of claim 7, wherein the location server (605) is one of a stand-alone network entity, co-located with a first network entity, or a logical function implemented in a second network entity.

11. A communications system comprising the local server (605) according to claim 7 and the first access node (105, 405, 607) adapted to determine user device position, the first access node (105, 405, 607) comprising:

   one or more processors; and
   a computer readable storage medium storing programming for execution by the one or more processors, the programming including instructions to configure the first access node (105, 405, 607) to:

receive a request for initiating a location determination process,
transmit positioning reference signals, PRSs, to at least a first and a second user devices (110, 112, 410, 412, 611, 613), and
initiate an inter-device measurement, IDM, at the at least first and second user devices (110, 112, 410, 412, 611, 613).

12. The communications system of claim 11, wherein the programming includes instructions to configure the first access node (105, 405, 607) to configure a second access (107, 407, 609) node to participate in the location determination process.

13. The communications system of claim 11, wherein the programming includes instructions to configure the first access node (105, 405, 607) to transmit a transmit IDM packet request to the first user device (110, 410, 611), and transmit a make an IDM request to the second user device (112, 412, 613).

**Patentansprüche**

1. Verfahren zur Bestimmung einer Position einer Benutzervorrichtung, wobei das Verfahren Folgendes umfasst:

Initiieren, durch einen Standortserver (605), eines Standortbestimmungsprozesses;
Empfangen, durch den Standortserver (605), von Messberichten, die von mindestens einer ersten und einer zweiten Benutzervorrichtung (110, 112, 410, 412, 611, 613) stammen, wobei die Messberichte festgestellte Ankunftszeitdifferenzmessungen, OTDOA-Messungen, die mindestens einem ersten und einem zweiten Zugriffsknoten (105, 107, 405, 407, 409, 607, 609) zugeordnet sind, vorrichtungsübergreifende Messungen, IDMs, zwischen der mindestens ersten und zweiten Benutzervorrichtung (110, 112, 410, 412, 611, 613) und Winkelinformationen, die dem mindestens ersten und zweiten Zugriffsknoten (105, 107, 405, 407, 409, 607, 609) zugeordnet sind, beinhalten; und
Bestimmen, durch den Standortserver (605), von Positionen der mindestens ersten und zweiten Benutzervorrichtung (110, 112, 410, 412, 611, 613) gemäß den OTDOA-Messungen, die dem mindestens ersten und zweiten Zugriffsknoten (105, 107, 405, 407, 409, 607, 609), den IDMs und den Winkelinformationen, die dem mindestens ersten und zweiten Zugriffsknoten (105, 107, 405, 407, 409, 607, 609) zugeordnet sind, zugeordnet sind,
wobei die Winkelinformationen, die dem mindestens ersten und zweiten Zugriffsknoten (105, 107, 405, 407, 409, 607, 609) zugeordnet sind, erste Winkelinformationen von einer der mindestens ersten und zweiten Benutzervorrichtung (110, 112, 410, 412, 611, 613) zu einem des mindestens ersten und zweiten Zugriffsknotens (105, 107, 405, 407, 409, 607, 609) und zweite Winkelinformationen von einem des mindestens ersten und zweiten Zugriffsknotens (105, 107, 405, 407, 409, 607, 609) zu einer der mindestens ersten und zweiten Benutzervorrichtung (110, 112, 410, 412, 611, 613) umfassen und
wobei das Bestimmen der Positionen der mindestens ersten und zweiten Benutzervorrichtung (110, 112, 410, 412, 611, 613) Folgendes umfasst:

Bestimmen, durch den Standortserver (605), einer Vielzahl von Positionen der mindestens ersten und zweiten Benutzervorrichtung (110, 112, 410, 412, 611, 613) gemäß den OTDOA-Messungen und den IDMs; und
Auswählen, durch den Standortserver (605), der Positionen der mindestens ersten und zweiten Benutzervorrichtung (110, 112, 410, 412, 611, 613) aus der Vielzahl von Positionen gemäß den Winkelinformationen, die dem mindestens ersten und zweiten Zugriffsknoten (105, 107, 405, 407, 409, 607, 609) zugeordnet sind, und wobei
die erste und die zweite Benutzervorrichtung (110, 112, 410, 412, 611, 613) zwei Benutzergeräte, UEs, sind,
der mindestens erste und zweite Zugriffsknoten (105, 107, 405, 407, 409, 607, 609) zuverlässige Sichtverbindungs-eNBs, LOS-eNBs, sind,
die Winkelinformationen die ersten und die zweiten Winkelinformationen von einem der zwei UEs zu einem der LOS-eNBs umfassen und
die ersten oder die zweiten Winkelinformationen von einem der LOS-eNBs zu einem der zwei UEs dazu verwendet werden, zu bestimmen, welche eine von nicht eindeutigen Positionen aus der Vielzahl der Positionen die tatsächliche Position der zwei UEs ist, wobei mindestens eine der nicht eindeutigen Positionen der zwei UEs mit den ersten oder den zweiten Winkelinformationen in Konflikt steht und eliminiert wird und eine Position des anderen UE, die mit der eliminierten Position gepaart ist, ebenfalls eliminiert wird.

2. Verfahren nach Anspruch 1, wobei die IDMs eine Umlaufzeitmessung, RTT-Messung, und mindestens einen eines Ankunftswinkels, AoA, von der ersten Benutzervorrichtung (110, 410, 611) zu der zweiten Benutzervorrichtung (112, 412, 613), eines Abgangswinkels, AoD, von der ersten Benutzervorrichtung (110, 410, 611) zu der zweiten Benutzervorrichtung (112, 412, 613), eines AoA von der zweiten Benutzervorrichtung (112, 412, 613) zu der ersten Benutzervorrichtung (110, 410, 611) oder eines AoD von der zweiten Benutzervorrichtung (112, 412, 613) zu der ersten Benutzervorrichtung (110, 410, 611) umfassen.

3. Verfahren nach Anspruch 1, wobei die IDMs eine RTT-Messung und mindestens zwei eines ersten AoA von der ersten Benutzervorrichtung (110, 410, 611) zu der zweiten Benutzervorrichtung (112, 412, 613), eines zweiten AoA von der ersten Benutzervorrichtung (110, 410, 611) zu der zweiten Benutzervorrichtung (112, 412, 613), eines dritten AoA von der zweiten Benutzervorrichtung (112, 412, 613) zu der ersten Benutzervorrichtung (110, 410, 611), eines vierten AoA von der zweiten Benutzervorrichtung (112, 412, 613) zu der ersten Benutzervorrichtung (110, 410, 611), eines ersten AoD von der ersten Benutzervorrichtung (110, 410, 611) zu der zweiten Benutzervorrichtung (112, 412, 613), eines zweiten AoD von der ersten Benutzervorrichtung (110, 410, 611) zu der zweiten Benutzervorrichtung (112, 412, 613), eines dritten AoD von der zweiten Benutzervorrichtung (112, 412, 613) zu der ersten Benutzervorrichtung (110, 410, 611) oder eines vierten AoD von der zweiten Benutzervorrichtung (112, 412, 613) zu der ersten Benutzervorrichtung (110, 410, 611) umfassen.

4. Verfahren zur Bestimmung einer Position einer Benutzervorrichtung, wobei das Verfahren Folgendes umfasst:

    Empfangen, durch einen ersten Zugriffsknoten (105, 405, 607), einer Anforderung zum Initiieren eines Standortbestimmungsprozesses;
    Übertragen, durch den ersten Zugriffsknoten (105, 405, 607), von Positionsreferenzsignalen, PRSs, an mindestens eine erste und eine zweite Benutzervorrichtung (110, 112, 410, 412, 611, 613);
    Initiieren, durch den ersten Zugriffsknoten (105, 405, 607), einer vorrichtungsübergreifenden Messung, IDM, an der mindestens ersten und zweiten Benutzervorrichtung (110, 112, 410, 412, 611, 613);

Empfangen, durch den ersten Zugriffsknoten (105, 405, 607), mindestens eines Messberichts, der festgestellte Ankunftszeitdifferenzmessungen, OTDOA-Messungen, die dem ersten Zugriffsknoten (105, 405, 607) und einem zweiten Zugriffsknoten (107, 407, 609) zugeordnet sind, vorrichtungsübergreifende Messungen, IDMs, und Winkelinformationen, die dem ersten Zugriffsknoten (105, 405, 607) und dem zweiten Zugriffsknoten (107, 407, 609) zugeordnet sind, beinhaltet; und
Übertragen, durch den ersten Zugriffsknoten (105, 405, 607), des mindestens einen Messberichts an einen Standortserver (605),
wobei die Winkelinformationen, die dem mindestens ersten und zweiten Zugriffsknoten (105, 107, 405, 407, 409, 607, 609) zugeordnet sind, erste Winkelinformationen von einer der mindestens ersten und zweiten Benutzervorrichtung (110, 112, 410, 412, 611, 613) zu einem des mindestens ersten und zweiten Zugriffsknotens (105, 107, 405, 407, 409, 607, 609) und zweite Winkelinformationen von einem des mindestens ersten und zweiten Zugriffsknotens (105, 107, 405, 407, 409, 607, 609) zu einer der mindestens ersten und zweiten Benutzervorrichtung (110, 112, 410, 412, 611, 613) umfassen und
wobei das Bestimmen der Positionen der mindestens ersten und zweiten Benutzervorrichtung (110, 112, 410, 412, 611, 613) Folgendes umfasst:

    Bestimmen, durch den Standortserver (605), einer Vielzahl von Positionen der mindestens ersten und zweiten Benutzervorrichtung (110, 112, 410, 412, 611, 613) gemäß den OTDOA-Messungen und den IDMs; und
    Auswählen, durch den Standortserver (605), der Positionen der mindestens ersten und zweiten Benutzervorrichtung (110, 112, 410, 412, 611, 613) aus der Vielzahl von Positionen gemäß den Winkelinformationen, die dem mindestens ersten und zweiten Zugriffsknoten (105, 107, 405, 407, 409, 607, 609) zugeordnet sind, und wobei
    die erste und die zweite Benutzervorrichtung (110, 112, 410, 412, 611, 613) zwei Benutzergeräte, UEs, sind,
    der mindestens erste und zweite Zugriffsknoten (105, 107, 405, 407, 409, 607, 609) zuverlässige Sichtverbindungs-eNBs, LOS-eNBs, sind,
    die Winkelinformationen die ersten und die zweiten Winkelinformationen von einem der zwei UEs zu einem der LOS-eNBs umfassen und

die ersten oder die zweiten Winkelinformationen von einem der LOS-eNBs zu einem der zwei UEs dazu verwendet werden, zu bestimmen, welche eine von nicht eindeutigen Positionen aus der Vielzahl der Positionen die tatsächliche Position der zwei UEs ist, wobei mindestens eine der nicht eindeutigen Positionen der zwei UEs mit den ersten oder den zweiten Winkelinformationen in Konflikt steht und eliminiert wird und eine Position des anderen UE, die mit der eliminierten Position gepaart ist, ebenfalls eliminiert wird.

5. Verfahren nach Anspruch 4, wobei das Initiieren der IDM Folgendes umfasst:

Übertragen, durch den ersten Zugriffsknoten (105, 405, 607), einer IDM-Paketübertragungsanforderung an die erste Benutzervorrichtung (110, 410, 611); und
Übertragen, durch den ersten Zugriffsknoten (105, 405, 607), einer IDM-Anlegeanforderung an die zweite Benutzervorrichtung (112, 412, 613).

6. Verfahren nach Anspruch 4, ferner umfassend Konfigurieren, durch den ersten Zugriffsknoten (105, 405, 607), der mindestens ersten und zweiten Benutzervorrichtung (110, 112, 410, 412, 611, 613) dazu, OTDOA-Messungen zu tätigen;
wobei das Konfigurieren der mindestens ersten und zweiten Benutzervorrichtung (110, 112, 410, 412, 611, 613) dazu, die OTDOA-Messungen zu tätigen, Übertragen von Ressourcenzuweisungsinformationen bezüglich einer Ressource umfasst, die dazu verwendet wird, die PRSs zu übermitteln.

7. Standortserver (605), der dazu angepasst ist, eine Position einer Benutzervorrichtung zu bestimmen, wobei der Standortserver (605) Folgendes umfasst:

einen oder mehrere Prozessoren; und
ein computerlesbares Speichermedium, das eine Programmierung zur Ausführung durch den einen oder die mehreren Prozessoren speichert, wobei die Programmierung Anweisungen beinhaltet, um den Standortserver (605) zu Folgendem zu konfigurieren:

Initiieren eines Standortbestimmungsprozesses,
Empfangen von Messberichten, die von mindestens einer ersten und einer zweiten Benutzervorrichtung (110, 112, 410, 412, 611, 613) stammen, wobei die Messberichte festgestellte Ankunftszeitdifferenzmessungen, OTDOA-Messungen, die mindestens einem ersten und einem zweiten Zugriffsknoten (105, 107, 405, 407, 409, 607, 609) zugeordnet sind, vorrichtungsübergreifende Messungen, IDMs, zwischen der mindestens ersten und zweiten Benutzervorrichtung (110, 112, 410, 412, 611, 613) und Winkelinformationen, die dem mindestens ersten und zweiten Zugriffsknoten (105, 107, 405, 407, 409, 607, 609) zugeordnet sind, beinhalten; und
Bestimmen von Positionen der mindestens ersten und zweiten Benutzervorrichtung (110, 112, 410, 412, 611, 613) gemäß den OTDOA-Messungen, die dem mindestens ersten und zweiten Zugriffsknoten (105, 107, 405, 407, 409, 607, 609), den IDMs und den Winkelinformationen, die dem mindestens ersten und zweiten Zugriffsknoten (105, 107, 405, 407, 409, 607, 609) zugeordnet sind, zugeordnet sind,
wobei die Winkelinformationen, die dem mindestens ersten und zweiten Zugriffsknoten (105, 107, 405, 407, 409, 607, 609) zugeordnet sind, erste Winkelinformationen von einer der mindestens ersten und zweiten Benutzervorrichtung (110, 112, 410, 412, 611, 613) zu einem des mindestens ersten und zweiten Zugriffsknotens (105, 107, 405, 407, 409, 607, 609) und zweite Winkelinformationen von einem des mindestens ersten und zweiten Zugriffsknotens (105, 107, 405, 407, 409, 607, 609) zu einer der mindestens ersten und zweiten Benutzervorrichtung (110, 112, 410, 412, 611, 613) umfassen und
wobei das Bestimmen der Positionen der mindestens ersten und zweiten Benutzervorrichtung (110, 112, 410, 412, 611, 613) Folgendes umfasst:

Bestimmen, durch den Standortserver (605), einer Vielzahl von Positionen der mindestens ersten und zweiten Benutzervorrichtung (110, 112, 410, 412, 611, 613) gemäß den OTDOA-Messungen und den IDMs; und
Auswählen, durch den Standortserver (605), der Positionen der mindestens ersten und zweiten Benutzervorrichtung (110, 112, 410, 412, 611, 613) aus der Vielzahl von Positionen gemäß den Winkelinformationen, die dem mindestens ersten und zweiten Zugriffsknoten (105, 107, 405, 407, 409, 607, 609) zugeordnet sind, wobei
die erste und die zweite Benutzervorrichtung (110, 112, 410, 412, 611, 613) zwei Benutzergeräte, UEs, sind,

der mindestens erste und zweite Zugriffsknoten (105, 107, 405, 407, 409, 607, 609) zuverlässige Sichtverbindungs-eNBs, LOS-eNBs, sind,

die Winkelinformationen die ersten und die zweiten Winkelinformationen von einem der zwei UEs zu einem der LOS-eNBs umfassen und

die ersten oder die zweiten Winkelinformationen von einem der LOS-eNBs zu einem der zwei UEs dazu verwendet werden, zu bestimmen, welche eine von nicht eindeutigen Positionen aus der Vielzahl der Positionen die tatsächliche Position der zwei UEs ist, wobei mindestens eine der nicht eindeutigen Positionen der zwei UEs mit den ersten oder den zweiten Winkelinformationen in Konflikt steht und eliminiert wird und eine Position des anderen UE, die mit der eliminierten Position gepaart ist, ebenfalls eliminiert wird.

8. Standortserver (605) nach Anspruch 7, wobei die Programmierung Anweisungen beinhaltet, um den Standortserver (605) zu einer Standortbestimmungsanforderung an mindestens einen des mindestens ersten und zweiten Zugriffsknotens (105, 107, 405, 407, 409, 607, 609) zu konfigurieren.

9. Standortserver (605) nach Anspruch 7, wobei die Programmierung Anweisungen beinhaltet, um den Standortserver (605) dazu zu konfigurieren, eine Vielzahl von Positionen der mindestens ersten und zweiten Benutzervorrichtung (110, 112, 410, 412, 611, 613) gemäß den OTDOA-Messungen und den IDMs zu bestimmen und die Positionen der mindestens ersten und zweiten Benutzervorrichtung (110, 112, 410, 412, 611, 613) aus der Vielzahl von Positionen gemäß den Winkelinformationen auszuwählen.

10. Standortserver (605) nach Anspruch 7, wobei der Standortserver (605) eine einer eigenständigen Netzentität, die mit einer ersten Netzentität am gleichen Standort befindlich ist, oder einer logischen Funktion ist, die in einer zweiten Netzentität umgesetzt ist.

11. Kommunikationssystem, umfassend den lokalen Server (605) nach Anspruch 7 und den ersten Zugriffsknoten (105, 405, 607), der dazu angepasst ist, die Position der Benutzervorrichtung zu bestimmen, wobei der erste Zugriffsknoten (105, 405, 607) Folgendes umfasst:

einen oder mehrere Prozessoren; und

ein computerlesbares Speichermedium, das eine Programmierung zur Ausführung durch den einen oder die mehreren Prozessoren speichert, wobei die Programmierung Anweisungen beinhaltet, um den ersten Zugriffsknoten (105, 405, 607) zu Folgendem zu konfigurieren:

Empfangen einer Anforderung zum Initiieren eines Standortbestimmungsprozesses, Übertragen von Positionsreferenzsignalen, PRSs, an mindestens eine erste und eine zweite Benutzervorrichtung (110, 112, 410, 412, 611, 613) und Initiieren einer vorrichtungsübergreifenden Messung, IDM, an der mindestens ersten und zweiten Benutzervorrichtung (110, 112, 410, 412, 611, 613).

12. Kommunikationssystem nach Anspruch 11, wobei die Programmierung Anweisungen beinhaltet, um den ersten Zugriffsknoten (105, 405, 607) dazu zu konfigurieren, einen zweiten Zugriffsknoten (107, 407, 609) dazu zu konfigurieren, an dem Standortbestimmungsprozess teilzunehmen.

13. Kommunikationssystem nach Anspruch 11, wobei die Programmierung Anweisungen beinhaltet, um den ersten Zugriffsknoten (105, 405, 607) dazu zu konfigurieren, eine IDM-Paketübertragungsanforderung an die erste Benutzervorrichtung (110, 410, 611) zu übertragen und eine IDM-Anlegeanforderung an die zweite Benutzervorrichtung (112, 412, 613) zu übertragen.

## Revendications

1. Procédé de détermination de position de dispositif utilisateur, le procédé comprenant :

l'initiation, par un serveur de localisation (605), d'un processus de détermination de localisation ;
la réception, par le serveur de localisation (605), de rapports de mesure provenant d'au moins un premier et un second dispositifs utilisateur (110, 112, 410, 412, 611, 613), les rapports de mesure comportent des mesures de différence de temps d'arrivée observée, OTDOA, associées à au moins un premier et un second nœuds d'accès (105, 107, 405, 407, 409, 607, 609), des mesures inter-dispositifs, IDM, entre les au moins premier et second dispositifs utilisateur (110, 112, 410, 412, 611, 613) et des informations d'angle associées aux au moins premier et second nœuds d'accès (105, 107, 405, 407, 409, 607, 609) ; et
la détermination, par le serveur de localisation (605), de positions des au moins premier et second dispositifs utilisateur (110, 112, 410, 412, 611, 613) conformément aux mesures OTDOA associées aux au moins premier et second nœuds d'accès (105, 107, 405, 407, 409, 607, 609), aux IDM et aux informations d'angle associées aux au moins premier et second nœuds d'accès (105, 107, 405, 407, 409, 607, 609), dans lequel les informations d'angle associées aux au moins premier et second nœuds d'accès (105, 107, 405, 407, 409, 607, 609) comprennent des premières informations angulaires de l'un des au moins premier et second dispositifs utilisateur (110, 112, 410, 412, 611, 613) vers l'un des au moins premier et second nœuds d'accès (105, 107, 405, 407, 409, 607, 609), et des secondes informations angulaires de l'un des au moins premier et second nœuds d'accès (105, 107, 405, 407, 409, 607, 609) vers l'un des au moins premier et second dispositifs utilisateur (110, 112, 410, 412, 611, 613), et dans lequel la détermination des positions des au moins premier et second dispositifs utilisateur (110, 112, 410, 412, 611, 613) comprend :

la détermination, par le serveur de localisation (605), d'une pluralité de positions des au moins premier et second dispositifs utilisateur (110, 112, 410, 412, 611, 613) conformément aux mesures OTDOA et aux IDM ; et

la sélection, par le serveur de localisation (605), des positions des au moins premier et second dispositifs utilisateur (110, 112, 410, 412, 611, 613) à partir de la pluralité de positions, conformément aux informations d'angle associées aux au moins premier et second nœuds d'accès (105, 107, 405, 407, 409, 607, 609), et dans lequel

les au moins premier et second dispositifs utilisateur (110, 112, 410, 412, 611, 613) sont deux équipements utilisateur, UE,

les au moins premier et second nœuds d'accès (105, 107, 405, 407, 409, 607, 609) sont des eNB en visibilité directe, LOS, fiables,

les informations d'angle comprennent les premières et secondes informations angulaires de l'un des deux UE vers l'un des eNB LOS, et

les premières ou secondes informations angulaires de l'un des eNB LOS vers l'un des deux UE sont utilisées pour déterminer laquelle des positions non uniques à partir de la pluralité de positions est la position réelle des deux UE, dans lequel au moins l'une des positions non uniques des deux UE entre en conflit avec les premières ou secondes informations d'angle et est éliminée, et une position de l'autre UE qui est appariée à la position éliminée est également éliminée.

**2.** Procédé selon la revendication 1, dans lequel les IDM comprennent une mesure de temps d'aller-retour, RTT, et au moins l'un d'un angle d'arrivée, AoA, du premier dispositif utilisateur (110, 410, 611) vers le second dispositif utilisateur (112, 412, 613), d'un angle de départ, AoD, du premier dispositif utilisateur (110, 410, 611) vers le second dispositif utilisateur (112, 412, 613), d'un AoA du second dispositif utilisateur (112, 412, 613) vers le premier dispositif utilisateur (110, 410, 611) ou d'un AoD du second dispositif utilisateur (112, 412, 613) vers le premier dispositif utilisateur (110, 410, 611).

**3.** Procédé selon la revendication 1, dans lequel les IDM comprennent une mesure RTT et au moins deux d'un premier AoA du premier dispositif utilisateur (110, 410, 611) vers le second dispositif utilisateur (112, 412, 613), d'un deuxième AoA du premier dispositif utilisateur (110, 410, 611) vers le second dispositif utilisateur (112, 412, 613), d'un troisième AoA du second dispositif utilisateur (112, 412, 613) vers le premier dispositif utilisateur (110, 410, 611), d'un quatrième AoA du second dispositif utilisateur (112, 412, 613) vers le premier dispositif utilisateur (110, 410, 611), d'un premier AoD du premier dispositif utilisateur (110, 410, 611) vers le second dispositif utilisateur (112, 412, 613), d'un deuxième AoD du premier dispositif utilisateur (110, 410, 611) vers le second dispositif utilisateur (112, 412, 613), d'un troisième AoD du second dispositif utilisateur (112, 412, 613) vers le premier dispositif utilisateur (110, 410, 611) ou d'un quatrième AoD du second dispositif utilisateur (112, 412, 613) vers le premier dispositif utilisateur (110, 410, 611).

**4.** Procédé de détermination de position de dispositif utilisateur, le procédé comprenant :

la réception, par un premier nœud d'accès (105, 405, 607), d'une demande d'initiation d'un processus de détermination de localisation ;

la transmission, par le premier nœud d'accès (105, 405, 607), de signaux de référence de positionnement, PRS, à au moins un premier et un second dispositifs utilisateur (110, 112, 410, 412, 611, 613) ;

l'initiation, par le premier nœud d'accès (105, 405, 607), d'une mesure inter-dispositifs, IDM, au niveau des au moins premier et second dispositifs utilisateur (110, 112, 410, 412, 611, 613) ;

la réception, par le premier nœud d'accès (105, 405, 607), d'au moins un rapport de mesure comportant des mesures de différence de temps d'arrivée observée, OTDOA, associées au premier nœud d'accès (105, 405, 607) et à un second nœud d'accès (107, 407, 609), des mesures inter-dispositifs, IDM, et des informations d'angle associées au premier nœud d'accès (105, 405, 607) et au second nœud d'accès (107, 407, 609) ; et

la transmission, par le premier nœud d'accès (105, 405, 607), de l'au moins un rapport de mesure à un serveur de localisation (605), dans lequel les informations d'angle associées aux au moins premier et second nœuds d'accès (105, 107, 405, 407, 409, 607, 609) comprennent des premières informations angulaires de l'un des au moins premier et second dispositifs utilisateur (110, 112, 410, 412, 611, 613) vers l'un des au moins premier et second nœuds d'accès (105, 107, 405, 407, 409, 607, 609), et des secondes informations angulaires de l'un des au moins premier et second nœuds d'accès (105, 107, 405, 407, 409, 607, 609) vers l'un des au moins premier et second dispositifs utilisateur (110, 112, 410, 412, 611, 613), et dans lequel la détermination des positions des au moins premier et second dispositifs utilisateur (110, 112, 410, 412, 611, 613) comprend :

la détermination, par le serveur de localisation (605), d'une pluralité de positions des au moins premier et second dispositifs utilisateur (110, 112, 410, 412, 611, 613) conformément aux mesures OTDOA et aux IDM ; et

la sélection, par le serveur de localisation (605), des positions des au moins premier et second dispositifs utilisateur (110, 112, 410, 412, 611, 613) à partir de la pluralité de positions, conformément aux informations d'angle associées aux au moins premier et second nœuds d'accès (105, 107, 405, 407, 409, 607, 609) et dans lequel

les au moins premier et second dispositifs utilisateur (110, 112, 410, 412, 611, 613) sont deux équipements utilisateur, UE, les au moins premier et second nœuds d'accès (105, 107, 405, 407, 409, 607, 609) sont des eNB en visibilité directe, LOS, fiables, les informations d'angle comprennent les premières et secondes informations angulaires de l'un des deux UE vers l'un des eNB LOS, et les premières ou secondes informations angulaires de l'un des eNB LOS vers l'un des deux UE sont utilisées pour déterminer laquelle des positions non uniques à partir de la pluralité de positions est la position réelle des deux UE, dans lequel au moins l'une des positions non uniques des deux UE entre en conflit avec les premières ou secondes informations d'angle et est éliminée, et une position de l'autre UE qui est appariée à la position éliminée est également éliminée.

**5.** Procédé selon la revendication 4, dans lequel l'initiation de l'IDM comprend :

la transmission, par le premier nœud d'accès (105, 405, 607), d'une requête de paquet IDM à transmettre au premier dispositif utilisateur (110, 410, 611) ; et
la transmission, par le premier nœud d'accès (105, 405, 607), d'une requête IDM à effectuer au second dispositif utilisateur (112, 412, 613).

**6.** Procédé selon la revendication 4, comprenant également la configuration, par le premier nœud d'accès (105, 405, 607), des au moins premier et second dispositifs utilisateur (110, 112, 410, 412, 611, 613) pour effectuer des mesures OTDOA ; dans lequel la configuration des au moins premier et second dispositifs utilisateur (110, 112, 410, 412, 611, 613) pour effectuer les mesures OTDOA comprend la transmission d'informations d'allocation de ressources concernant une ressource utilisée pour transmettre les PRS.

**7.** Serveur de localisation (605) conçu pour déterminer une position de dispositif utilisateur, le serveur de localisation (605) comprenant :

un ou plusieurs processeurs ; et
un support de stockage lisible par ordinateur stockant une programmation à exécuter par les un ou plusieurs processeurs, la programmation comportant des instructions pour configurer le serveur de localisation (605) pour :

initier un processus de détermination de localisation,
recevoir des rapports de mesure provenant d'au moins un premier et un second dispositifs utilisateur (110, 112, 410, 412, 611, 613), les rapports de mesure comportent des mesures de différence de temps d'arrivée observée, OTDOA, associées à au moins un premier et un second nœuds d'accès (105, 107, 405, 407, 409, 607, 609), des mesures inter-dispositifs, IDM, entre les au moins premier et second dispositifs utilisateur (110, 112, 410, 412, 611, 613) et des informations d'angle associées aux au moins premier et second nœuds d'accès (105, 107, 405, 407, 409, 607, 609), et

déterminer des positions des au moins premier et second dispositifs utilisateur (110, 112, 410, 412, 611, 613) conformément aux mesures OTDOA associées aux au moins premier et second nœuds d'accès (105, 107, 405, 407, 409, 607, 609), aux IDM et aux informations d'angle associées aux au moins premier et second nœuds d'accès (105, 107, 405, 407, 409, 607, 609),

dans lequel les informations d'angle associées aux au moins premier et second nœuds d'accès (105, 107, 405, 407, 409, 607, 609) comprennent des premières informations angulaires de l'un des au moins premier et second dispositifs utilisateur (110, 112, 410, 412, 611, 613) vers l'un des au moins premier et second nœuds d'accès (105, 107, 405, 407, 409, 607, 609), et des secondes informations angulaires de l'un des au moins premier et second nœuds d'accès (105, 107, 405, 407, 409, 607, 609) vers l'un des au moins premier et second dispositifs utilisateur (110, 112, 410, 412, 611, 613), et

dans lequel la détermination des positions des au moins premier et second dispositifs utilisateur (110, 112, 410, 412, 611, 613) comprend :

> la détermination, par le serveur de localisation (605), d'une pluralité de positions des au moins premier et second dispositifs utilisateur (110, 112, 410, 412, 611, 613) conformément aux mesures OTDOA et aux IDM ; et
> la sélection, par le serveur de localisation (605), des positions des au moins premier et second dispositifs utilisateur (110, 112, 410, 412, 611, 613) à partir de la pluralité de positions, conformément aux informations d'angle associées aux au moins premier et second nœuds d'accès (105, 107, 405, 407, 409, 607, 609),
> dans lequel
> les au moins premier et second dispositifs utilisateur (110, 112, 410, 412, 611, 613) sont deux équipements utilisateur, UE,
> les au moins premier et second nœuds d'accès (105, 107, 405, 407, 409, 607, 609) sont des eNB en visibilité directe, LOS, fiables,
> les informations d'angle comprennent les premières et secondes informations angulaires de l'un des deux UE vers l'un des eNB LOS, et
les premières ou secondes informations angulaires de l'un des eNB LOS vers l'un des deux UE sont utilisées pour déterminer laquelle des positions non uniques à partir de la pluralité de positions est la position réelle des deux UE, dans lequel au moins l'une des positions non uniques des deux UE entre en conflit avec les premières ou secondes informations d'angle et est éliminée, et une position de l'autre UE qui est appariée à la position éliminée est également éliminée.

8. Serveur de localisation (605) selon la revendication 7, dans lequel la programmation comporte des instructions pour configurer le serveur de localisation (605) pour une demande de détermination de localisation vers au moins l'un des au moins premier et second nœuds d'accès (105, 107, 405, 407, 409, 607, 609).

9. Serveur de localisation (605) selon la revendication 7, dans lequel la programmation comporte des instructions pour configurer le serveur de localisation (605) afin de déterminer une pluralité de positions des au moins premier et second dispositifs utilisateur (110, 112, 410, 412, 611, 613) conformément aux mesures OTDOA et aux IDM, et de sélectionner les positions des au moins premier et second dispositifs utilisateur (110, 112, 410, 412, 611, 613) à partir de la pluralité de positions, conformément aux informations d'angle.

10. Serveur de localisation (605) selon la revendication 7, dans lequel le serveur de localisation (605) est soit une entité de réseau autonome, soit colocalisé avec une première entité de réseau, soit une fonction logique mise en œuvre dans une seconde entité de réseau.

11. Système de communication comprenant le serveur local (605) selon la revendication 7 et le premier nœud d'accès (105, 405, 607) conçu pour déterminer une position de dispositif utilisateur, le premier nœud d'accès (105, 405, 607) comprenant :

> un ou plusieurs processeurs ; et
> un support de stockage lisible par ordinateur stockant une programmation à exécuter par les un ou plusieurs processeurs, la programmation comportant des instructions pour configurer le premier nœud d'accès (105, 405, 607) pour :
>
> > recevoir une demande d'initiation d'un processus de détermination de localisation,
> > transmettre des signaux de référence de positionnement, PRS, à au moins un premier et un second dispositifs utilisateur (110, 112, 410, 412, 611, 613), et

initier une mesure inter-dispositifs, IDM, au niveau des au moins premier et second dispositifs utilisateur (110, 112, 410, 412, 611, 613).

12. Système de communication selon la revendication 11, dans lequel la programmation comporte des instructions pour configurer le premier nœud d'accès (105, 405, 607) afin de configurer un second nœud d'accès (107, 407, 609) pour participer au processus de détermination de localisation.

13. Système de communication selon la revendication 11, dans lequel la programmation comporte des instructions pour configurer le premier nœud d'accès (105, 405, 607) afin de transmettre une requête de paquet IDM à transmettre au premier dispositif utilisateur (110, 410, 611) et de transmettre une requête IDM à effectuer au second dispositif utilisateur (112, 412, 613).

**Fig. 1**

**Fig. 2**
**(Prior Art)**

**Fig. 3**

**Fig. 4**

Fig. 5

600

| 605 | 607 | 609 | 611 | 613 |
|---|---|---|---|---|
| LOCATION SERVER | eNB1 | eNB2 | UEA | UEB |

REQUEST START POSITION PROCESS — 620

TRANSMIT PRS — 622

TRANSMIT PRS — 624

UEA MEASURES OTDOA 626

TRANSMIT PRS — 628

TRANSMIT PRS — 630

UEB MEASURES OTDOA 632

REQUEST UEA TO TRANSMIT IDM PACKET — 634

REQUEST UEB TO MEASURE IDM PACKET — 636

UEB MEASURES ANGLE INFORMATION 638

UEA REPORTS OTDOA 640

TRANSMIT MEASUREMENT REPORT

UEB MEASURES IDM (EG, RTT/AOA_UEA/AOD_UEA) 646

TRANSMIT IDM PACKET — 644

UEB REPORTS OTDOA, IDM, ANGLE INFORMATION

TRANSMIT MEASUREMENT REPORT — 648

LOCATION SERVER DETERMINES POSITION 652

*Fig. 6*

27

Fig. 7

Fig. 8

Fig. 9

1000

START

1005
RECEIVE PRS
MEASUREMENT REQ.

1007
RECEIVE PRS/
MEASURE OTDOA

1009
RECEIVE IDM
TRANSMIT REQ.

1011
TRANSMIT IDM
PACKET

1013
TRANSMIT
MEASUREMENT RPT

END

*Fig. 10*

1100

START

1105
RECEIVE PRS
MEASUREMENT REQ.

1107
RECEIVE PRS/
MEASURE OTDOA

1109
RECEIVE IDM MEASUREMENT
REQ./MAKE ANGLE INFO.
MEASUREMENT

1111
RECEIVE IDM
PACKET

1113
GENERATE IDM

1115
TRANSMIT
MEASUREMENT RPT

END

*Fig. 11*

ASSUMED TIME OF TX(UEB):
WRONG BY -ΔT 1217

RX(UEA) 1219

ACTUAL TIME OF TX(UEA) 1221

1210

1205

UEA

ΔT

1212

1207

UEB

ACTUAL TIME OF TX(UEB) 1215

RX(UEB) 1225

ASSUMED TIME OF TX(UEA):
WRONG BY +ΔT 1223

1200

*Fig. 12*

1300

1210

1212

UEA

UEB

1305 TRIGGER MEASUREMENT PROCEDURE

1307 PING FROM UEA

1309

DETERMINE HALF RTT
WITH ERROR +ΔT

PING FROM UEB 1311

1313

DETERMINE HALF RTT
WITH ERROR -ΔT

1315 SHARE RTT RESULTS 1317

DETERMINE RTT = RTT(UEA) + RTT(UEB)

*Fig. 13*

*Fig. 14*

*Fig. 16*

1590  1504

1510

1502

TRANSCEIVER

1506  1500

INPUT/OUTPUT  PROCESSING
UNIT

1508

MEMORY

*Fig. 15A*

1590  1556

1570

1550  1552

TRX

1566

INPUT/OUTPUT  PROCESSING
UNIT

1558

MEMORY

*Fig. 15B*

**EP 3 610 684 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2239913 A1

- US 2016366554 A1